# EUROPÄISCHE PATENTSCHRIFT

(11) **EP 3 232 640 B1**
(45) Veröffentlichungstag und Bekanntmachung des Hinweises auf die Patenterteilung: **25.12.2019**
(21) Anmeldenummer: 17166333.9
(22) Anmeldetag: 12.04.2017
(51) Int. Cl.: H04L 29/06, H04L 9/32, G06F 21/72

(54) **GÜLTIGKEITSPRÜFUNG UND SPERRUNG VON ZERTIFIKATEN**
VALIDATION AND DISABLING OF CERTIFICATES
VÉRIFICATION DE LA VALIDITÉ ET BLOCAGE DE CERTIFICATS

(30) Priorität: 13.04.2016 DE 102016206199
(43) Veröffentlichungstag der Anmeldung: 18.10.2017
(73) Patentinhaber: Bundesdruckerei GmbH, 10969 Berlin (DE)
(72) Erfinder: BASTIAN, Paul, 10243 Berlin (DE); MORGNER, Frank, 15537 Grünheide (DE)
(74) Vertreter: Richardt Patentanwälte PartG mbB

(56) Entgegenhaltungen:
- EP-A1- 1 594 316
- DE-A1-102006 059 487
- US-A1- 2011 178 884

## Beschreibung

Die Erfindung betrifft ein Verfahren zur Gültigkeitsprüfung eines Zertifikats, ein digitales Speichermedium mit einem zu prüfenden Zertifikat, ein ID-Token sowie ein System zur Gültigkeitsprüfung.

Zertifikate werden im Allgemeinen von hierzu berechtigten Stellen herausgegeben, den so genannten Certification Authorities (CA). Aus Sicherheitsgründen weisen die herausgegebenen Zertifikate üblicherweise eine vorgegebene zeitliche Beschränkung in Form einer Gültigkeitsdauer auf, die in dem Zertifikat angegeben ist. Diese Gültigkeitsdauer verhindert es, dass Zertifikate zeitlich unbeschränkt zum Einsatz kommen und so durch möglicherweise veraltete, aber immer noch gültige Zertifikate Sicherheitslücken entstehen können. Dies gilt auch für so genannte CV-Zertifikate, d.h. Card-Verifiable-Zertifikate oder auch Card Verifiable Certificates (CVCs), die aufgrund ihrer relativ einfachen Struktur intern durch einen integrierten elektronischen Schaltkreis, zum Beispiel einer Chipkarte, geprüft werden können, ohne dass ein Zugriff auf einen externen Server oder dergleichen erforderlich ist. Eine Implementierung von solchen CVCs ist beispielsweise in der ISO/IEC 7816-8 spezifiziert.

Bei Chipkarten ohne interne Uhr, wie sie beispielsweise bei zertifikatsgebundenen Authentisierungen wie etwa Zutrittskontrollprotokollen zum Einsatz kommen, ergibt sich jedoch das Problem, dass ohne eine Zeitangabe nicht geprüft werden kann, ob die Gültigkeitsdauer eines entsprechenden Zertifikats abgelaufen ist. Für solche Chipkarten ohne eigene Uhr sind Verfahren zur Approximation einer aktuellen Zeit bekannt. So wird eine aktuelle Zeit beispielsweise durch die Ausstellungszeit bzw. das Ausstellungsdatum empfangener Zertifikate approximiert. Jedes Mal, wenn ein Zertifikat mit einer neueren Ausstellungszeit bzw. einem neueren Ausstellungsdatum empfangen wird, wird die entsprechende Zeit- bzw. Datumsangabe ausgelesen und als Näherung für tatsächliche die Zeit bzw. das tatsächliche Datum verwendet.

Falls ein Zertifikat kompromittiert ist, beispielsweise indem in die falschen Hände geraten ist und eine Verwendung desselben zu Missbrauchszwecken zu befürchten steht, kann sich die Notwendigkeit ergeben das entsprechende Zertifikat zu sperren, dessen Gültigkeitsdauer im Allgemeinen aber noch nicht abgelaufen ist. Aus dem Stand der Technik sind Verfahren bekannt Zertifikate mittels Sperrlisten zu sperren. Bei den Sperrlisten handelt es sich entweder um Negativ- oder Positivlisten. Ein Zertifikat gilt als gesperrt, wenn es in eine Negativliste eingetragen bzw. in eine Positivliste nicht eingetragen ist. Die Verwendung solcher Sperrlisten erfordert allerdings den Einsatz zentraler Einrichtungen zur Verwaltung der Sperrlisten. Zur Prüfung, ob ein Zertifikat gesperrt ist, ist ein Zugriff auf diese zentral verwalteten Sperrlisten notwendig.

Bei einfachen Chipkarten mit geringer Prozessor- und/oder Speicherleistung, die keinen Zugriff auf solche zentral verwalteten Sperrlisten haben oder bei denen ein solcher Zugriff zu erheblichen Latenzzeiten führen würde, wird das Problem des Sperrens von Zertifikaten im Allgemeinen durch kurze Gültigkeitsdauern umgangen. Dabei werden die Gültigkeitsdauern der Zertifikate sehr kurz gewählt, sodass ein Zertifikat seine Gültigkeit nur beibehält, wenn seine Gültigkeitsdauer durch das Ausstellen eines aktualisierten Zertifikats mit neuer Gültigkeitsdauer immer wieder verlängert wird. Wird die Gültigkeitsdauer nicht verlängert, verliert das Zertifikat zeitnah seine Gültigkeit.

Dieser Ansatz hat im Falle von Chipkarten ohne interne Uhr jedoch den Nachteil, dass ein kompromittiertes Zertifikat solange seine Gültigkeit beibehält bis die Gültigkeitsdauer des Zertifikats abgelaufen ist und die Chipkarte zudem ein Zertifikat mit einer Austellzeit bzw. einem Austelldatum empfängt, welche(s) aktueller ist als die Gültigkeitsdauer des kompromittierten Zertifikats. Solange diese beiden Voraussetzungen nicht erfüllt sind kann das kompromittierte Zertifikat weiterhin ungehindert eingesetzt werden, wodurch eine erhebliche Sicherlücke entsteht.

Die DE 10 2006 059487 A1 beschreibt ein Verfahren zum Empfang einer vertrauenswürdigen Zeitinformation mit folgenden Schritten: Empfang eines Zertifikats, wobei das Zertifikat eine Angabe der Anfangszeit von dessen Gültigkeitsdauer beinhaltet, Überprüfung der Validität des Zertifikats und Speicherung der Anfangszeit als die vertrauenswürdige Zeitinformation in einem Speicher, wenn das Zertifikat als valide erkannt worden ist.

Die EP 1 594 316 A1 beschreibt ein Verfahren zum Überprüfen einer Gültigkeit eines einem Netzwerkgerät in einem Netzwerk zugeordneten Zertifikats, wobei das Verfahren ein Empfangen eines verschlüsselten Inhalts und eines dem Inhalt zugeordneten Gültigkeitsindex umfasst. Die Gültigkeit des Zertifikats wird anhand eines in dem Zertifikat enthaltenen Zeitindexes ausgewertet, wobei der Zeitindex einen Wert aufweist, der dem Zeitpunkt der Ausstellung des Zertifikats entspricht, und anhand des Gültigkeitsindexes, der dem verschlüsselten Inhalt zugeordnet ist.

Der Erfindung liegt die Aufgabe zugrunde, ein verbessertes Verfahren zur Gültigkeitsprüfung eines Zertifikats, ein digitales Speichermedium mit einem zu prüfenden Zertifikat und ein ID-Token sowie ein System zur Gültigkeitsprüfung zur Verfügung zu stellen, welche effizient sind und zugleich die oben genannte Sicherheitslücke schließen.

Die der Erfindung zugrunde liegende Aufgabe wird durch die Merkmale der unabhängigen Patentansprüche gelöst. Bevorzugte Ausführungsformen der Erfindung sind in den abhängigen Patentansprüchen angegeben.

Ausführungsformen betreffen ein Verfahren zum Prüfen der Gültigkeit eines ersten Zertifikats durch ein ID-Token. Das Verfahren umfasst: Empfangen des ersten Zertifikats über eine Kommunikationsschnittstelle des ID-Tokens, wobei das erste Zertifikat eine Signatur einer Berechtigungs-PKI aufweist. Zudem weist das erste Zertifikat einen Identifikator einer Ausstellgeneration und einen Identifikator einer Auslaufgeneration auf, die die Gültigkeit des ersten Zertifikats festgelegen. Die Ausstellgeneration legt die Zertifikatsgeneration fest, mit der die Gültigkeit des ersten Zertifikats beginnt. Die Auslaufgeneration legt die Zertifikatsgeneration fest, mit der die Gültigkeit des ersten Zertifikats endet. In einem Speicher des ID-Tokens ist ein Identifikator einer Ausstellgeneration eines zweiten Zertifikats gespeichert, welches das ID-Token zu einem früheren Zeitpunkt empfangen hat. Die gespeicherte Ausstellgeneration des zweiten Zertifikats legt einen Referenzwert für die Gültigkeitsprüfung fest.

Zudem umfasst das Verfahren: Verifizieren der Signatur des ersten Zertifikats durch das ID-Token und Prüfen der Gültigkeit des ersten Zertifikats durch das ID-Token. Dabei wird geprüft, ob die Auslaufgeneration des ersten Zertifikats identisch zum oder fortgeschrittener als der Referenzwert für die Gültigkeitsprüfung ist. Im Fall, dass die Auslaufgeneration des ersten Zertifikats identisch zum oder fortgeschrittener als der Referenzwert für die Gültigkeitsprüfung ist, wird die Gültigkeit des ersten Zertifikats durch das ID-Token anerkannt. Zudem wird geprüft, ob die Ausstellgeneration des ersten Zertifikats fortgeschrittener als der Referenzwert für die Gültigkeitsprüfung ist. Im Fall, dass die Ausstellgeneration des ersten Zertifikats fortgeschrittener als der Referenzwert für die Gültigkeitsprüfung ist, wird zudem der Identifikators der Ausstellgeneration des zweiten Zertifikats im Speicher des ID-Tokens durch den Identifikator der Ausstellgeneration des ersten Zertifikats als neuem Referenzwert für Gültigkeitsprüfungen von Zertifikaten durch das ID-Token ersetzt.

Der Begriff "ID-Token" bezeichnet eine Vorrichtung, wie beispielsweise ein tragbares elektronisches Gerät, zum Beispiel einen sogenannten USB-Stick, oder ein Dokument, insbesondere ein Wert- oder Sicherheitsdokument.

Unter einem "Dokument" werden papierbasierte und/oder kunststoffbasierte Dokumente verstanden, wie zum Beispiel Ausweisdokumente, insbesondere Reisepässe, Personalausweise, Visas sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung von zumindest einem Attribut integriert ist.

Die vorliegende Erfindung ist besonders für solche ID-Token vorteilhaft, die zur vollständig internen Prüfung der Gültigkeit eines Zertifikats ausgebildet sind, also ohne beispielsweise auf einen externen Server oder dergleichen zugreifen zu müssen. Insbesondere ist die Erfindung vorteilhaft für ID-Token, die zur Prüfung der Gültigkeit von CVCs ausgebildet sind.

Nach Ausführungsformen weist das ID-Token keine eigenständige Uhr auf, d.h. keine fortwährend laufende Local Clock, welche zur ständigen Aktualisierung einer vertrauenswürdigen Zeitinformation dient. Insbesondere weist das ID-Token nach Ausführungsformen keine eigene Energieversorgung auf. Als Energiequelle kann vielmehr eine Einrichtung zum "Energieernten" (energy harvesting) dienen, wie beispielsweise RFID-Antennen, piezoelektrische Kristalle, thermoelektrische Generatoren oder Ähnliches.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Das Zertifikat kann Metadaten umfassen, die beispielsweise spezifizieren, für welches Attribut oder welche Attribute des Nutzers, die in einem geschützten Speicherbereich des ID-Tokens gespeichert sind, ein Lesegerät bzw. Lesemodul zur Durchführung eines Lesezugriffs berechtigt ist. Unter einem geschützten Speicherbereich wird hier ein Bereich eines elektronischen Speichers verstanden, auf den ein Zugriff, das heißt ein Lesezugriff oder ein Schreibzugriff, von einem mit dem Speicher gekoppelten Prozessor nur dann ermöglicht wird, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln. Ferner können durch Metadaten auch die jeweiligen Schreibrechte für Attributspezifikationen oder Attribute in einem Zertifikat definiert sein. Ein solches Zertifikat wird auch als Berechtigungszertifikat bezeichnet.

Ein CV-Zertifikat umfasst beispielsweise folgende Informationen: Ausstellende CA, Zertifikatsinhaber, evtl. mit dem Zertifikat verbundene Zugriffsrechte, öffentlicher Schlüssel des Zertifikatsinhabers, Gültigkeitszeitraum des Zertifikats. Diese Informationen werden auch von Zertifikate gemäß dem Standard X.509 umfasst, die im Allgemeinen darüber hinaus noch mehr Informationen umfassen und bedingt durch ihre Flexibilität einen komplexen Algorithmus zur Auswertung erforderlich machen.

Zertifikate gemäß der vorliegenden Erfindung umfassen demgegenüber anstelle eines Gültigkeitszeitraums, wie er etwa im Standard X.509 oder der ISO/IEC 7816-8 spezifiziert wird, einen Identifikator einer Ausstellgeneration und einen Identifikator einer Auslaufgeneration.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann auch einer elektronischen Signatur zum Beispiel zugeordnet werden, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" oder "elektronische Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem einem Zertifikat zugeordneten privaten Schlüssel eines kryptographischen Schlüsselpaares verschlüsselter Hashwert. Die Besonderheit einer solchen Signatur besteht darin, dass deren Urheberschaft und Zugehörigkeit zu einer bestimmten Person oder Instanz durch jeden Dritten geprüft werden kann.

Unter einer "Berechtigungs-PKI" wird hier eine Public Key Infrastructure (PKI) verstanden, die zur Erstellung von Zertifikaten für Terminals dient, wobei die Zertifikate zur Prüfung des Typs des Terminals sowie der Rechte des Terminals und zum Nachweis von deren der Authentizität dienen, wie beispielsweise in der technischen Richtlinie TR-03127, "Architektur elektronischer Personalausweis und elektronischer Aufenthaltstitel", Version 1.16, 14. Oktober 2015, Bundesamt für Sicherheit in der Informationstechnik, spezifiziert, vergleiche insbesondere Seite 29 und 30 unter 5.2. Unter einem "Identifikator einer Austellgeneration" bzw. einem "Identifikator einer Auslaufgeneration" wird hier eine Austellgeneration bzw. eine Auslaufgeneration betreffende Information verstanden, welche die Austellgeneration bzw. Auslaufgeneration eines Zertifikats charakterisiert. Ein solcher Identifikator kann beispielsweise ein alphanumerischer Datenwert und insbesondere eine ganze Zahl sein.

Unter einer "Zertifikatsfamilienkennung" wird hier eine Zertifikatsfamilien betreffende Information verstanden, welche die Zertifikatsfamilie charakterisiert. Eine solche Kennung kann beispielsweise ein alphanumerischer Datenwert und insbesondere eine ganze Zahl sein, welche(r) allen Zertifikaten die der gleichen Familie zugeordneten sind gemeinsam ist.

Unter einem "digitalen Speichermedium" werden hier sowohl flüchtige als auch nicht flüchtige elektronische Speicher verstanden. Unter einem "nichtflüchtigen elektronischen Speicher" wird hier ein Speicher zur dauerhaften Speicherung von Daten, insbesondere von Attributen und Identifikatoren, verstanden, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein solcher nichtflüchtiger Speicher zeichnet sich dadurch aus, dass die darauf gespeicherten Daten auch nach Abschalten der Energieversorgung erhalten bleiben. Unter einem "flüchtigen elektronischen Speicher" wird hier ein Speicher zur vorübergehenden Speicherung von Daten, insbesondere von Attributen und Identifikatoren, verstanden, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "Prozessor" wird hier eine Logikschaltung verstanden, die zur Ausführung von Programminstruktionen dient. Die Logikschaltung kann auf einem oder mehreren diskreten Bauelementen implementiert sein, insbesondere auf einem Chip.

Unter einer "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann, beispielsweise nach einem RFID- und/oder NFC-Standard.

Unter einem "Terminal" wird hier ein elektronisches Gerät verstanden, welches ein Lesegerät umfasst, das einen Lesezugriff und/oder einen Schreibzugriff auf das ID-Token ermöglicht, beispielsweise in Form eines sogenannten Chipkartenterminals. Das Terminal mit dem Lesegerät kann einen integralen Bestandteil eines Nutzer-Computersystems bilden oder als separate Komponente ausgeführt sein, beispielsweise als Peripheriegerät des Nutzer-Computersystems. Insbesondere kann es sich bei dem Lesegerät um ein sogenanntes Klasse 1, 2 oder 3 Chipkartenlesegerät handeln. Das Lesegerät kann mit einer kontaktlosen und/oder kontaktbehafteten Schnittstelle zum Datenaustausch mit einem ID-Token ausgestattet ist.

Ausführungsformen können den Vorteil haben, dass für die Gültigkeitsprüfung von Zertifikaten durch ID-Token vollständig auf Zeitangaben und damit auf Uhren verzichtet werden kann. Damit benötigen die verwendeten ID-Token keine kontinuierliche Energieversorgung.

Anstatt einer Zeitangabe bzw. eines Datums wird ein fiktiver Generationszähler implementiert, der über empfangene Zertifikate eine tatsächliche aktuelle Ausstellgeneration approximiert. Die Verwendung von frei festsetzbaren Generationen bietet somit den Vorteil einer zeitunabhängigen Steuerung der Gültigkeit von Zertifikaten. Wird ein Zertifikat kompromittiert, so kann durch eine Aktualisierung und Ausgabe mindestens eines gültigen Zertifikats, vorzugsweise aller im Umlauf befindlichen gültigen Zertifikate, ein Sprung zu einer neuen Ausstellgeneration realisiert werden, die das kompromittierte Zertifikat umgehend ungültig werden lässt. Die neue Ausstellgeneration wird dabei so gewählt, dass sie fortgeschrittener als die Auslaufgeneration des kompromittierten Zertifikats ist. Durch die neue Austellgeneration werden nach und nach die Referenzwerte aller ID-Token, die das entsprechende aktualisierte Zertifikat empfangen auf die neue Ausstellgeneration aktualisiert. Jedes ID-Token mit aktualisiertem Referenzwert wird das kompromittierte Zertifikat als ungültig zurückweisen.

Im Falle eines möglichen Kompromittierung eines Zertifikats, beispielsweise durch Diebstahl desselben, kann durch eine Aktualisierung mindestens eines gültigen Zertifikats, vorzugsweise aller im Umlaufbefindlichen gültigen Zertifikate, das ID-Token sofort geschützt werden, nachdem eine neue Zertifikatsgeneration ausgeteilt und das ID-Token mindestens ein aktualisiertes Zertifikat der neuen Zertifikatsgeneration empfangen hat. Demgegenüber muss im Stand der Technik mit einer auf einem Datum basierenden Gültigkeitsdauer gewartet werden, bis die entsprechende Gültigkeitsdauer des Zertifikats tatsächlich abgelaufen ist.

Somit wird eine aktive, indirekte Sperrung eines kompromittierten Zertifikats ohne Sperrlisten ermöglicht, wobei die Sperrung anstatt auf einem Referenzdatum auf einem fiktiven Generationenzähler beruht und beispielsweise durch Hochzählen über die Ablaufgeneration des kompromittiertes Zertifikat und durch Neugenerierung und Neuausgabe mindestens eines entsprechenden Zertifikates erfolgt. Hierbei weist das entsprechende Zertifikat eine Austellgeneration auf, welche fortgeschrittener als die Ablaufgeneration des kompromittierten Zertifikats ist. Dadurch wird der fiktiven Generationenzähler hochgesetzt, indem der Referenzwert für Gültigkeitsprüfungen in dem oder den ID-Token, welche das entsprechende Zertifikat empfangen, durch dessen Austellgenration ersetzt wird. Vorzugsweise werden aktualisierte Zertifikate an alle Entitäten des Systems ausgegeben.

Die Aktualisierung erfolgen dabei durch eine Zertifikatsausstellungsinstanz, und die Verwaltung sowie Ausgabe durch eine Zertifikatsverwaltungsinstanz. Nach Ausführungsformen sind Zertifikatsverwaltungsinstanz und Zertifikatsausstellungsinstanz in einer Instanz, wie etwa einem Zertifikatsverwaltungsserver, zusammengefasst. Nach anderen Ausführungsformen können Zertifikatsverwaltungsinstanz und Zertifikatsausstellungsinstanz aber auch separat, beispielweise in Form zweier separater Server, implementiert sein.

Nach Ausführungsformen kann entweder zuerst die Prüfung der Gültigkeit des ersten Zertifikats erfolgen oder zuerst die Prüfung, ob die Ausstellgeneration des ersten Zertifikats fortgeschrittener als der Referenzwert für die Gültigkeitsprüfung ist.

Nach Ausführungsformen kann zuerst die Prüfung der Gültigkeit des ersten Zertifikats erfolgen und erst auf eine Anerkennung der Gültigkeit des ersten Zertifikats durch das ID-Token hin die Prüfung, ob die Ausstellgeneration des ersten Zertifikats fortgeschrittener als der Referenzwert für die Gültigkeitsprüfung ist. Ist das erste Zertifikat ungültig bzw. abgelaufen, d.h. der Referenzwert fortgeschrittener als die Auslaufgeneration des ersten Zertifikats, so wird der Referenzwert erst recht fortgeschrittener sein als die Ausstellgenration des ersten Zertifikats. Eine explizite Prüfung erübrigt sich in diesem Fall, da diese bereits implizit Teil der Gültigkeitsprüfung ist. Nur falls das Zertifikat gültig ist, kann eine explizite Prüfung angezeigt sein.

Ausführungsformen können den Vorteil haben, dass statistisch gesehen im Mittel Prüfschritte eingespart werden können, nämlich stets dann, wenn bereits das Ergebnis der Gültigkeitsprüfung negativ ausfällt.

Nach Ausführungsformen kann die Prüfung der Gültigkeit des ersten Zertifikats zumindest teilweise in die Prüfung, ob die Ausstellgeneration des ersten Zertifikats fortgeschrittener als der Referenzwert ist, integriert sein: Ergibt eine erste Prüfung, dass die Ausstellgeneration des ersten Zertifikats fortgeschrittener als der Referenzwert ist, so folgt daraus automatisch, dass auch die Ablaufgeneration des ersten Zertifikats fortgeschrittener als der Referenzwert ist. Die Ablaufgeneration eines Zertifikats ist stets fortgeschrittener als dessen Ausstellgeneration. Eine explizite Gültigkeitsprüfung erübrigt sich in diesem Fall. Falls die Ausstellgeneration des ersten Zertifikats nicht fortgeschrittener als der Referenzwert ist, bleibt jedoch zu prüfen, ob das Zertifikat dennoch gültig ist. In diesem Fall wird eine explizite Prüfung der Gültigkeit des ersten Zertifikats als zusätzlicher Schritt ausgeführt.

Ausführungsformen können den Vorteil haben, dass statistisch gesehen im Mittel Prüfschritte eingespart werden können, nämlich stets dann, wenn die das Ergebnis der Prüfung, ob die Ausstellgeneration des ersten Zertifikats fortgeschrittener als der Referenzwert ist, positiv ausfällt.

Nach Ausführungsformen weisen die Zertifikate einen fixen Abstand zwischen Ausstellgeneration und eine Auslaufgeneration auf. Dies kann den Vorteil haben, dass eine vereinfachte und effiziente Verwaltung der Zertifikate ermöglicht wird. Durch einen geringen Abstand zwischen Ausstellgeneration und Auslaufgeneration und eine regelmäßige Aktualisierung der Zertifikate spätestens bei Erreichen der jeweiligen Auslaufgeneration kann die Gefahr von Sicherheitsproblemen durch veraltete Zertifikate verhindert werden.

Nach Ausführungsformen werden im Umlauf befindliche Zertifikate regelmäßig ausgetauscht. Hierzu wird jeweils ein neues Zertifikat erzeugt, welches dazu vorgesehen ist ein entsprechendes bisher im Umlauf befindliches Zertifikat zu ersetzen. Dabei weist das neu erzeugte Zertifikat eine Ausstellgeneration auf, welche fortgeschrittener als die Auslaufgeneration des zu ersetzenden Zertifikats ist. Wird das neue erzeugte Zertifikat in Umlauf gebracht, so führt die neue Ausstellgeneration dazu, dass der Referenzwert für Gültigkeitsprüfungen in dem oder den ID-Token, welche das neue Zertifikat empfangen, durch dessen Austellgenration ersetzt wird. Somit wird der der fiktiven Generationenzähler, welcher dem Referenzwert entspricht, hochgesetzt,

Nach Ausführungsformen umfasst das erste Zertifikat zusätzlich eine den Identifikatoren zugeordnete erste Zertifikatsfamilienkennung, wobei in dem Speicher des ID-Tokens eine dem Referenzwert zugordnete zweite Zertifikatsfamilienkennung des zweiten Zertifikats gespeichert ist, wobei beim Prüfen der Gültigkeit des ersten Zertifikats geprüft wird, ob die zweite Zertifikatsfamilienkennung mit der ersten Zertifikatsfamilienkennung übereinstimmt, und wobei die gespeicherte Ausstellgeneration des zweiten Zertifikats nur bei Feststellen einer Übereinstimmung als Referenzwert für die Gültigkeitsprüfung des ersten Zertifikats verwendet wird.

Ausführungsformen können den Vorteil haben, dass für unterschiedliche Zertifikatsfamilien unterschiedliche Referenzwerte bzw. unterschiedliche Zertifikatsgenerationen gelten. Zertifikate können je nach Art und/oder Verwendungszweck durch einheitliche Zertifikatsfamilienkennungen zu Zertifikatsfamilien zusammengefasst werden oder eine Gruppe von Zertifikaten kann durch unterschiedliche Zertifikatsfamilienkennungen in mehrere Zertifikatsfamilien unterteilt werden. Dies kann den Vorteil haben, das ein Zertifikat einer Zertifikatsfamilie durch eine Aktualisierung der weiterhin gültigen Zertifikate derselben Zertifikatsfamilie gesperrt werden kann, während die Zertifikate der anderen Zertifikatsfamilien davon unbeeinflusst bleiben. Somit kann beispielsweise die Anzahl der bei einer Sperrung zu aktualisierenden Zertifikate begrenzt und somit die Effizienz gesteigert werden
Nach Ausführungsformen umfasst ein initiales Speichern eines initialen Referenzwerts für Gültigkeitsprüfungen von Zertifikaten durch das ID-Token: Empfangen eines initialen Zertifikats über die Kommunikationsschnittstelle des ID-Tokens, wobei das initiale Zertifikat eine Signatur einer Berechtigungs-PKI und zumindest einen Identifikator einer Ausstellgeneration aufweist. Die Ausstellgeneration legt die Zertifikatsgeneration fest, mit der die Gültigkeit des initialen Zertifikats beginnt. Zudem umfasst das Verfahren: Verifizieren der Signatur des initialen Zertifikats durch das ID-Token und Prüfen, ob ein Referenzwert für Gültigkeitsprüfungen von Zertifikaten in dem Speicher des ID-Tokens gespeichert ist. Im Fall, dass kein Referenzwert für Gültigkeitsprüfungen von Zertifikaten in dem Speicher des ID-Tokens gespeichert ist, wird die Gültigkeit des initialen Zertifikats durch das ID-Token anerkannt und der Identifikator der Ausstellgeneration des initialen Zertifikats im Speicher des ID-Tokens als initialem Referenzwert für Gültigkeitsprüfungen von Zertifikaten durch das ID-Token gespeichert.

Ausführungsformen können den Vorteil haben, dass das ein effizientes Verfahren zum Initialisieren von Referenzwerten zur Verfügung gestellt wird.

Nach Ausführungsformen umfasst das initiale Zertifikat zusätzlich eine dem Identifikator der Ausstellgeneration zugeordnete Zertifikatsfamilienkennung, wobei im Fall, dass kein Referenzwert für Gültigkeitsprüfungen von Zertifikaten in dem Speicher des ID-Tokens gespeichert ist, die Zertifikatsfamilienkennung des initialen Zertifikats im Speicher des ID-Tokens gespeichert wird.

Ausführungsformen können den Vorteil haben, dass durch Verwendung von Zertifikatsfamilienkennungen für eine Mehrzahl von Zertifikatsfamilien voneinander unabhängige initiale Referenzwerte bereit gestellt werden.

Nach Ausführungsformen umfasst das Verfahren im Fall, dass der Referenzwert für die Gültigkeitsprüfung fortgeschrittener ist als die Auslaufgeneration des empfangenen ersten Zertifikats: Feststellen der Ungültigkeit des ersten Zertifikats.

Ausführungsformen können den Vorteil haben, dass ein effizientes Verfahren zum Feststellen der Ungültigkeit eines Zertifikats bereitgestellt wird. Durch die Wahl einer ausreichend fortgeschrittenen Ausstellgeneration kann ein bestehendes Zertifikat effizient gesperrt werden.

Nach Ausführungsformen sind die Identifikatoren jeweils eine ganze Zahl.

Ausführungsformen können den Vorteil haben, dass ein effizient zu handhabender Identifikator bereitgestellt wird, welcher wenig Speicherplatz auf dem ID-Token benötigt.

Nach Ausführungsformen ist ein Identifikator, der eine fortgeschrittenere Generation identifiziert, größer als ein Identifikator, der eine weniger fortgeschrittene Generation identifiziert.

Ausführungsformen können den Vorteil haben, dass leicht ersichtlich ist, welcher Identifikator fortgeschrittener ist, und Identifikatoren somit effizient verglichen werden können. Zudem kann die Gültigkeitsdauer von Zertifikaten somit unendlich oft verlängert werden.

Nach Ausführungsformen ist ein Identifikator, der eine fortgeschrittenere Generation identifiziert, kleiner als ein Identifikator, der eine weniger fortgeschrittene Generation identifiziert.

Ausführungsformen können den Vorteil haben, dass die Austellgenerationen startend mit einem initialen Ausgangswert herunter gezählt werden. Dies hat den Vorteil, dass Zertifikate nicht unendlich oft verlängert werden können. Sind dies Generationen vollständig herunter gezählt, d.h. ist ein vordefiniertes Minimum Min ≥ 1 für die Ausstellgeneration neuer Zertifikate erreicht, so müssen neue Zertifikate mit unabhängigen Zertifikatsgenerationen erzeugt werden.

Nach Ausführungsformen sind die Zertifikate Zertifikate nach dem Standard X.509 oder CV-Zertifikate nach dem Standard ISO 7816-8, bei denen die Zeitangaben im Gültigkeitsfeld durch den Identifikator der Ausstellgeneration und den Identifikator der Auslaufgeneration ersetzt sind.

Ausführungsformen können den Vorteil haben, dass die Gültigkeit der Zertifikate unabhängig von der tatsächlichen Zeit bzw. dem tatsächlichen Datum festgesetzt und gesteuert werden kann.

Nach Ausführungsformen wird das erste Zertifikat mit einer Nachricht empfangen, die Daten und eine Signatur der Daten aufweist, wobei die Signatur anhand des ersten Zertifikats auf deren Gültigkeit geprüft wird, und die Daten verarbeitet werden, wenn die Signatur als gültig erkannt worden ist.

Ausführungsformen können den Vorteil haben, dass mit dem Zertifikat auf Basis einer zugrunde liegenden PKI beliebige Daten signiert werden und so deren Authentizität effizient gewährleitet wird.

Nach Ausführungsformen umfasst ein Sperren eines zu sperrenden Zertifikats: Erzeugen eines dritten Zertifikats, wobei das dritte Zertifikat eine Signatur einer Berechtigungs-PKI aufweist. Das dritte Zertifikat weist einen Identifikator einer Ausstellgeneration und einen Identifikator einer Auslaufgeneration auf, die die Gültigkeit des dritten Zertifikats festgelegen, wobei die Ausstellgeneration die Zertifikatsgeneration festlegt, mit der die Gültigkeit des dritten Zertifikats beginnt, wobei die Auslaufgeneration die Zertifikatsgeneration festlegt, mit der die Gültigkeit des dritten Zertifikats endet, und wobei die Austellgeneration des dritten Zertifikats fortgeschrittener ist als eine Auslaufgeneration des zu sperrenden Zertifikats. Zudem umfasst das Verfahren: Senden des dritten Zertifikats an das ID-Token.

Nach Ausführungsformen ist das zu sperrende Zertifikat das erste Zertifikat und das Sperren umfasst weiter: Empfangen des dritten Zertifikats über die Kommunikationsschnittstelle des ID-Tokens, Verifizieren der Signatur des dritten Zertifikats durch das ID-Token, Prüfen der Gültigkeit des dritten Zertifikats durch das ID-Token, wobei geprüft wird, ob die Auslaufgeneration des dritten Zertifikats identisch zum oder fortgeschrittener als der Referenzwert für die Gültigkeitsprüfung ist, im Fall, dass die Auslaufgeneration des dritten Zertifikats identisch zum oder fortgeschrittener als der Referenzwert für die Gültigkeitsprüfung ist, Anerkennen der Gültigkeit des dritten Zertifikats durch das ID-Token, Prüfen, ob die Ausstellgeneration des dritten Zertifikats fortgeschrittener als der Referenzwert für die Gültigkeitsprüfung ist, im Fall, dass die Ausstellgeneration des dritten Zertifikats fortgeschrittener als der Referenzwert für die Gültigkeitsprüfung ist, Ersetzen des Referenzwert für die Gültigkeitsprüfung im Speicher des ID-Tokens durch den Identifikator der Ausstellgeneration des dritten Zertifikats als neuem Referenzwert für Gültigkeitsprüfungen von Zertifikaten durch das ID-Token.

Ausführungsformen können den Vorteil haben, dass ein effizientes Verfahren zum Sperren von Zertifikaten zur Verfügung gestellt wird, ohne dass eine Sperrliste oder eine Uhr notwendig sind.

Nach Ausführungsformen kann entweder zuerst die Prüfung der Gültigkeit des dritten Zertifikats erfolgen oder zuerst die Prüfung, ob die Ausstellgeneration des dritten Zertifikats fortgeschrittener als der Referenzwert für die Gültigkeitsprüfung ist.

Nach Ausführungsformen kann zuerst die Prüfung der Gültigkeit des dritten Zertifikats erfolgen und erst auf eine Anerkennung der Gültigkeit des dritten Zertifikats durch das ID-Token hin die Prüfung, ob die Ausstellgeneration des dritten Zertifikats fortgeschrittener als der Referenzwert für die Gültigkeitsprüfung ist. Ist das dritte Zertifikat ungültig bzw. abgelaufen, d.h. der Referenzwert fortgeschrittener als die Auslaufgeneration des dritten Zertifikats, so wird der Referenzwert erst recht fortgeschrittener sein als die Ausstellgenration des dritten Zertifikats. Eine explizite Prüfung erübrigt sich in diesem Fall, da diese bereits implizit Teil der Gültigkeitsprüfung ist. Nur falls das Zertifikat gültig ist, kann eine explizite Prüfung angezeigt sein.

Ausführungsformen können den Vorteil haben, dass statistisch gesehen im Mittel Prüfschritte eingespart werden können, nämlich stets dann, wenn bereits das Ergebnis der Gültigkeitsprüfung negativ ausfällt.

Nach Ausführungsformen kann die Prüfung der Gültigkeit des dritten Zertifikats zumindest teilweise in die Prüfung, ob die Ausstellgeneration des dritten Zertifikats fortgeschrittener als der Referenzwert ist, integriert sein: Ergibt eine erste Prüfung, dass die Ausstellgeneration des dritten Zertifikats fortgeschrittener als der Referenzwert ist, so folgt daraus automatisch, dass auch die Ablaufgeneration des dritten Zertifikats fortgeschrittener als der Referenzwert ist. Die Ablaufgeneration eines Zertifikats ist stets fortgeschrittener als dessen Ausstellgeneration. Eine explizite Gültigkeitsprüfung erübrigt sich in diesem Fall. Falls die Ausstellgeneration des dritten Zertifikats nicht fortgeschrittener als der Referenzwert ist, bleibt jedoch zu prüfen, ob das Zertifikat dennoch gültig ist. In diesem Fall wird eine explizite Prüfung der Gültigkeit des dritten Zertifikats als zusätzlicher Schritt ausgeführt.

Ausführungsformen können den Vorteil haben, dass statistisch gesehen im Mittel Prüfschritte eingespart werden können, nämlich stets dann, wenn die das Ergebnis der Prüfung, ob die Ausstellgeneration des dritten Zertifikats fortgeschrittener als der Referenzwert ist, positiv ausfällt.

Nach Ausführungsformen wird das dritte Zertifikat durch einen Zertifikatsverwaltungsserver erzeugt und über ein Terminal an das ID-Token gesendet.

Ausführungsformen können den Vorteil haben, dass eine effiziente Umsetzung des Sperrvorgangs ermöglicht wird.

Nach Ausführungsformen ist das dritte Zertifikat dazu konfiguriert das zu sperrende erste Zertifikat zu ersetzen.

Ausführungsformen können den Vorteil haben, dass ein effizientes Verfahren zum aktualisieren des ersten Zertifikats bereitgestellt wird, wobei das bisherige erste Zertifikat mit seiner nunmehr abgelaufenen Gültigkeit aktiv gesperrt wird und nichtmehr eingesetzt werden kann.

Nach Ausführungsformen wird das erste Zertifikat bei Erreichen eines vordefinierten Schwellenwerts automatisch durch Erzeugung und Senden des dritten Zertifikats gesperrt.

Ausführungsformen können den Vorteil haben, dass Zertifikate regelmäßig aktualisiert werden und somit Missbrauchsmöglichkeiten eingeschränkt werden. Nach Ausführungsformen ist der Schwellenwert beispielsweise definiert als Ablaufen eines vordefinierten Zeitintervalls oder als Erreichen einer vordefinierten Ausstellgeneration für aktuelle Zertifikate. Beispielsweise werden Zertifikate regelmäßig am 1. Tag des Monats aktualisiert.

Ausführungsformen betreffen zudem ein digitales Speichermedium mit einem darin gespeicherten Zertifikat, wobei das Zertifikat eine Signatur einer Berechtigungs-PKI aufweist, wobei das Zertifikat einen Identifikator einer Ausstellgeneration und einen Identifikator einer Auslaufgeneration aufweist, die die Gültigkeit des Zertifikats festgelegen, wobei die Ausstellgeneration die Zertifikatsgeneration festlegt, mit der die Gültigkeit des Zertifikats beginnt, und wobei die Auslaufgeneration die Zertifikatsgeneration festlegt, mit der die Gültigkeit des Zertifikats endet.

Ausführungsformen können den Vorteil haben, dass ein Zertifikat mit einer Gültigkeit bereitgestellt wird, die unabhängig von Uhrzeit und/oder Datum frei gesteuert werden kann.

Ausführungsformen betreffen zudem ein ID-Token mit einer Kommunikationsschnittstelle und einem Speicher, wobei das ID-Token dazu konfiguriert ist, eines der zuvor beschriebenen Verfahren auszuführen.

Ausführungsformen können den Vorteil haben, dass ein ID-Token zum effizienten Prüfen der Gültigkeit eines Zertifikats einer Berechtigungs-PKI zur Verfügung gestellt wird.

Ausführungsformen betreffen zudem ein System, welches mindestens eines der zuvor beschriebenen ID-Token und mindestens ein Terminal umfasst, wobei das Terminal Kommunikationsschnittstellen und ein digitales Speichermedium mit einem der zuvor beschriebenen Zertifikat umfasst und das Terminal dazu konfiguriert ist, das Zertifikat an das ID-Token zu senden. Nach Ausführungsformen umfasst das System eine Mehrzahl von ID-Token.

Ausführungsformen können den Vorteil haben, dass ein Terminal mit Terminalzertifikaten zur Verfügung gestellt werde, deren Gültigkeit effizient steuerbar ist.

Nach Ausführungsformen umfasst das System einen Zertifikatsverwaltungsserver, welcher dazu konfiguriert ist, das Zertifikat des Terminals zu erzeugen, zu sperren und an das Terminal zu senden.

Ausführungsformen können den Vorteil haben, dass sie eine effiziente Handhabung der Zertifikate mittels einer zentralen Instanz in Form des Zertifikatsverwaltungsservers ermöglichen.

Nach Ausführungsformen umfasst das System eine Mehrzahl an Terminals jeweils mit Kommunikationsschnittstelle und einem der zuvor beschriebenen digitalen Speichermedien mit einem dem jeweiligen Terminal zugeordneten Zertifikat und wobei das jeweilige Terminal dazu konfiguriert ist, das entsprechende Zertifikat an das ID-Token zu senden.

Nach Ausführungsformen weisen alle Zertifikate jeweils eine identische Familienkennung auf.

Ausführungsformen können den Vorteil haben, dass die Zertifikate eine gemeinsame Zertifikatsfamilie bilden, sodass die Gültigkeit jedes einzelnen Zertifikats von den Austellgenerationen der anderen Zertifikate abhängt und über diese gesteuert werden kann.

Nach Ausführungsformen weisen einzelne Gruppen von Zertifikaten unterschiedliche Familienkennung auf. Die entsprechenden Gruppen bilden somit unterschiedliche Zertifikatsfamilien deren Generationen voneinander unabhängig sind, sodass die Gültigkeit von Zertifikaten unterschiedlicher Zertifikatsfamilien unabhängig voneinander gesteuert werden kann.

Nach Ausführungsformen ist der Zertifikatsverwaltungsserver dazu konfiguriert, die den Terminals jeweils zugeordneten Zertifikate zu erzeugen, zu sperren und jeweils an das zugeordnete Terminal zu senden.

Nach Ausführungsformen ist der Zertifikatsverwaltungsserver dazu konfiguriert zum Sperren eines Zertifikats eines der Terminals für alle verbleibenden Terminals der Mehrzahl an Terminals jeweils ein neues Zertifikat zum Ersetzen des bisherigen Zertifikats des jeweiligen Terminals zu erzeugen, wobei das jeweilige neue Zertifikat eine Signatur einer Berechtigungs-PKI, einen Identifikator einer Ausstellgeneration und einen Identifikator einer Auslaufgeneration aufweist, wobei die Identifikatoren die Gültigkeit des jeweiligen neuen Zertifikats festgelegen, wobei die Ausstellgeneration die Zertifikatsgeneration festlegt, mit der die Gültigkeit des neuen Zertifikats beginnt, wobei die Auslaufgeneration die Zertifikatsgeneration festlegt, mit der die Gültigkeit des neuen Zertifikats endet, und wobei die Austellgeneration fortgeschrittener ist als die Auslaufgeneration des zu sperrenden Zertifikats, und die neuen Zertifikate an die jeweiligen zugeordneten Terminals zu senden.

Ausführungsformen können den Vorteil haben, dass ein effizientes System zum Sperren von Zertifikaten zur Verfügung gestellt wird.

Nach Ausführungsformen ist der Zertifikatsverwaltungsserver dazu konfiguriert, für die Zertifikate der Terminals jeweils bei Erreichen eines vordefinierten Schwellenwerts automatisch ein neues Zertifikat zum Ersetzen des bisherigen Zertifikats des jeweiligen Terminals zu erzeugen, wobei das jeweilige neue Zertifikat eine Signatur einer Berechtigungs-PKI, einen Identifikator einer Ausstellgeneration und einen Identifikator einer Auslaufgeneration aufweist, wobei die Identifikatoren die Gültigkeit des jeweiligen neuen Zertifikats festgelegen, wobei die Ausstellgeneration die Zertifikatsgeneration festlegt, mit der die Gültigkeit des neuen Zertifikats beginnt, wobei die Auslaufgeneration die Zertifikatsgeneration festlegt, mit der die Gültigkeit des neuen Zertifikats endet, wobei die Austellgeneration fortgeschrittener ist als die Auslaufgeneration des bisherigen Zertifikats des jeweiligen Terminals, und die neuen Zertifikate an die jeweiligen zugeordneten Terminals zu senden.

Ausführungsformen können den Vorteil haben, dass ein effizientes System zum automatischen Aktualisieren von Zertifikaten zur Verfügung gestellt wird.

Nach Ausführungsformen weisen die erzeugten Zertifikate jeweils eine zu der Familienkennung der zu ersetzenden Zertifikate identische Familienkennung auf.

Ausführungsformen können den Vorteil haben, dass die Gültigkeit von Zertifikaten auf Basis von Zertifikatsfamilien gesteuert werden kann, wobei die Generationen und damit Gültigkeit von Zertifikaten unterschiedlicher Zertifikatsfamilien voneinander unabhängig sind.

Im Weiteren werden Ausführungsformen der Erfindung mit Bezugnahme auf die Zeichnungen näher erläutert. Es zeigen:
- Figur 1: ein Blockdiagramm einer ersten beispielhaften Ausführungsform eines erfindungsgemäßen Systems,
- Figur 2: ein Flussdiagramm einer ersten beispielhaften Ausführungsform eines erfindungsgemäßen Verfahrens,
- Figur 3: Diagramme zur Veranschaulichung der Ausführungsform des erfindungsgemäßen Verfahrens der Figur 2,
- Figur 4: ein Flussdiagramm einer zweiten beispielhaften Ausführungsform eines erfindungsgemäßen Verfahrens,
- Figur 5: ein Flussdiagramm einer dritten beispielhaften Ausführungsform eines erfindungsgemäßen Verfahrens,
- Figur 6: ein Flussdiagramm einer vierten beispielhaften Ausführungsform eines erfindungsgemäßen Verfahrens und
- Figur 7: ein Flussdiagramm einer fünften beispielhaften Ausführungsform eines erfindungsgemäßen Verfahrens.

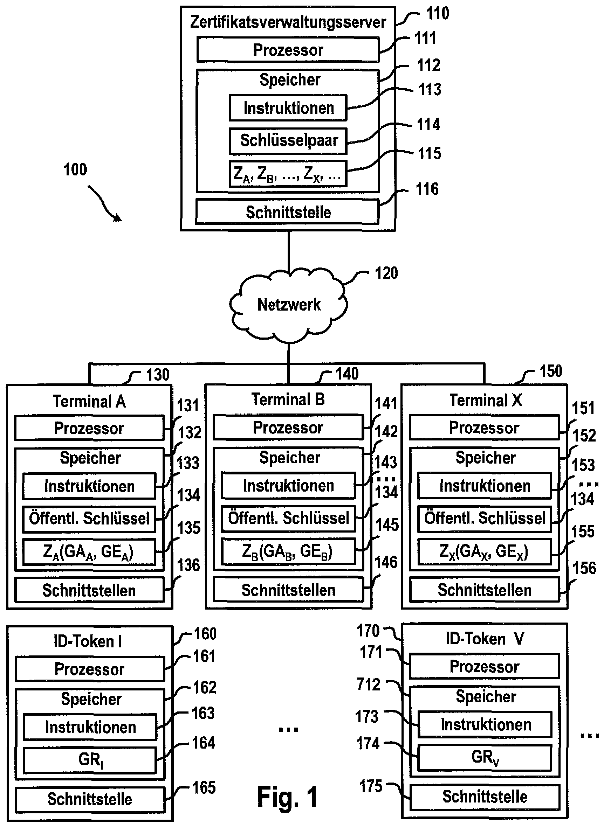

Die Figur 1 zeigt ein Blockdiagramm eines Systems 100, welches einen Zertifikatsverwaltungsserver 110, eine Mehrzahl von Terminals 130, 140, 150 sowie eine Mehrzahl von ID-Token 160, 170 umfasst. Von der Mehrzahl von Terminals sind beispielhaft drei Terminals gezeigt, d.h. Terminal A 130, Terminal B 140 und Terminal X 150. Von der Mehrzahl von ID-Token sind beispielhaft zwei ID-Token gezeigt, d.h. ID-Token I 160 und ID-Token V 170.

Der Zertifikatsverwaltungsserver 110 umfasst neben einer Schnittstelle 116 und einem Prozessor 111 einen Speicher 112, in welchem Instruktionen 113 gespeichert sind. Durch Ausführung der Instruktionen 113 durch den Prozessor 111 wird der Zertifikatsverwaltungsserver 110 dazu veranlasst ein erfindungsgemäßes Verfahren auszuführen. Zudem umfasst der Speicher 112 mindestens ein asymmetrisches Schlüsselpaar 114, welches einen öffentlichen und einen privaten Schlüssel umfasst. Unter Verwendung des asymmetrischen Schlüsselpaars 114 kann der Zertifikatsverwaltungsserver 110 Zertifikate 115 für die Terminals 130, 140, 150 ausstellen. Dazu werden die entsprechenden Zertifikate 115 beispielsweise jeweils von dem Zertifikatsverwaltungsserver 110 erstellt und mit dem privaten Schlüssel des asymmetrischen Schlüsselpaars 114 signiert. Bei der Signatur kann es sich beispielweise um eine aus dem zu signierenden Zertifikat gebildeten Hash-Wert handeln. Die resultierende Signatur kann mittels des öffentlichen Schlüssels 134 des asymmetrischen Schlüsselpaars 114 verifiziert werden. Der entsprechende öffentliche Schlüssel 134 kann zu diesem Zwecke als Teil des signierten Zertifikats oder separat zu diesem über das Netzwerk 120 an die die Signatur prüfenden Einrichtungen wie etwa die Terminals 130, 140, 150 oder die ID-Tokens 160, 170 verteilt werden. Zudem umfasst der Speicher 112 nach Ausführungsformen beispielsweis eine Zusammenstellung mit allen erstellten Zertifikaten oder einer Auswahl derselben, wie beispielsweise eine Zusammenstellung aller gültigen Zertifikate. Nach Ausführungsformen umfasst der Speicher eine Zusammenstellung, wie etwa eine Tabelle, mit den von den Zertifikaten umfassten Daten sowie Daten über die Zertifikate, wie etwa Kriterien, wann das jeweilige Zertifikat zu aktualisieren ist. Nach Ausführungsformen sind die Zertifikate in einer Datenbank (nicht gezeigt) gespeichert, auf welche der Zertifikatsverwaltungsserver 110 Zugriff hat.

Die Terminals 130, 140, 150 umfassen jeweils neben Schnittstellen 136, 146, 156 und einem Prozessor 131, 141, 151 einen Speicher 132, 142, 152, in welchem jeweils Instruktionen 133, 143, 153 gespeichert sind. Durch Ausführung der Instruktionen 133, 143, 153 durch den jeweiligen Prozessor 131, 141, 151 wird das zugehörige Terminal 130, 140, 150 dazu veranlasst ein erfindungsgemäßes Verfahren auszuführen. Zudem umfassen die Speicher 132, 142, 152, beispielweise jeweils den öffentlichen Schlüssel 134 des asymmetrischen Schlüsselpaars 114 des Zertifikatsverwaltungsservers 110 zum Verifizieren der Signatur der Zertifikate 135, 145, 155. Zudem können die Speicher 132, 142, 152 jeweils das entsprechenden Zertifikat 135, 145, 155 umfassen. Den öffentlichen Schlüssel 134 empfangen die Terminals 130, 140, 150 beispielsweise über das Netzwerk 120 von dem Zertifikatsverwaltungsserver 110. Nach Ausführungsformen wird der öffentliche Schlüssel 134 von dem jeweiligen Zertifikate 135, 145, 155 umfasst. Nach anderen Ausführungsformen wird der öffentliche Schlüssel 134 in Form einer separaten Datei zur Verfügung gestellt. Figur 1 zeigt beispielhaft die Zertifikate Z_{A} 135, Z_{B} 145 und Z_{X} 155, die jeweils dem Terminal A 130, Terminal B 140 bzw. Terminal X 150 zugeordnet sind. Die Zuordnung erfolgt beispielsweise mittels einer Kennung des zugeordneten Terminals, welche das entsprechende Zertifikat aufweist. Die Zertifikate 135, 145, 155 umfassen jeweils einen Identifikator einer Ausstellgeneration GA_{A}, GA_{B}, GA_{X} sowie einen Identifikator einer Auslaufgeneration GE_{A}, GE_{B}, GE_{X}, wobei die Ausstellgeneration GA_{A}, GA_{B}, GA_{X} die Generation festlegt, mit der die Gültigkeit des entsprechenden Zertifikats 135, 145, 155 beginnt, und die Auslaufgeneration GE_{A}, GE_{B}, GE_{X}, die Generation festlegt, mit der die Gültigkeit des entsprechenden Zertifikats 135, 145, 155 endet.

Die ID-Token 160, 170 umfassen jeweils neben einer Schnittstelle 165, 175 und einem Prozessor 161, 171 einen Speicher 162, 172, in welchem jeweils Instruktionen 163, 173 gespeichert sind. Durch Ausführung der Instruktionen 163, 173 durch den Prozessor 161, 171 wird das jeweilige ID-Token 160, 170 dazu veranlasst ein erfindungsgemäßes Verfahren auszuführen. Zudem umfassen der Speicher 161 des ID-Token I 160 bzw. der Speicher 171 des ID-Token V 170 jeweils einen Referenzwert GR_{I} 164 bzw. GR_{V} 174 für die Gültigkeitsprüfung der Zertifikate 135, 145, 155 der Terminals 130, 140, 150.

Die ID-Token 160, 170 können mit den Terminals 130, 140, 150 jeweils über die kontaktbehaftete oder kontaktlose Kommunikationsschnittstelle 165, 175 auf Seiten der ID-Token 160, 170 und einer komplementären Kommunikationsschnittstelle der Schnittstellen 136, 146, 156 auf Seiten der Terminals 130, 140, 150 kommunizieren. Hierbei kann es sich insbesondere um eine Nahfeldkommunikation, beispielsweise mittels RFID, Bluetooth oder WLAN handeln. Beispielsweise erfolgt die Kommunikation zwischen den Terminals 130, 140, 150 und den ID-Token 160, 170 entsprechend der Norm ISO 14443 drahtlos mit einer Frequenz von 13,56 MHz.

Die Schnittstellen 136, 146, 156 der Terminals 130, 140, 150 können jeweils neben einer Schnittstelle, die zur kontaktbehafteten oder kontaktlosen Kommunikation mit den ID-Token160, 170 konfiguriert ist, eine weitere Schnittstelle umfassen, die zur Kommunikation und Datenübertragung mit einer Schnittstelle 116 des Zertifikatsverwaltungsserver 110 über ein Netzwerk 120 konfiguriert ist. Bei dem Netzwerk 120 kann es sich beispielsweise um ein Intranet oder das Internet handeln.

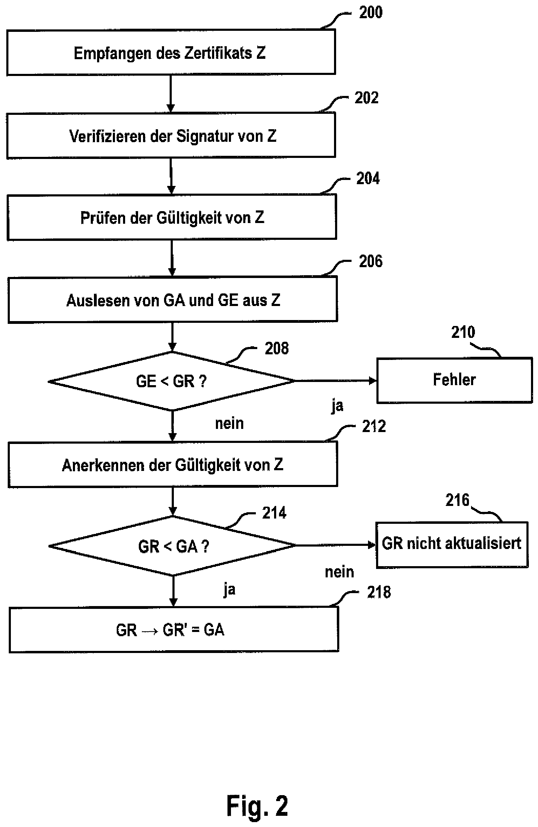

Die Figur 2 zeigt ein Flussdiagramm einer ersten beispielhaften Ausführungsform eines erfindungsgemäßen Verfahrens wie es von einem der ID-Token 160, 170 aus Figur 1 ausgeführt wird. In Schritt 200 wird von dem entsprechenden ID-Token ein signiertes Zertifikate Z empfangen. Bei dem empfangenen Zertifikat Z handelt es sich beispielsweise um eines der Zertifikate 135, 145, 155 der Terminals 130, 140, 150 aus Figur 1. In Schritt 202 wird die Signatur des Zertifikats Z mit einem der Signatur zugeordneten öffentlichen Schlüssel überprüft, beispielsweise dem Schlüssel 134 aus Figur 1. Der entsprechende Schlüssel kann dabei Teil des Zertifikats Z sein oder von dem prüfenden ID-Token separat empfangen werden. Die Verifizierung der Signatur kann zusätzlich eine Zertifikatskettenprüfung des öffentlichen Schlüssels bzw. eines den öffentlichen Schlüssel verifizierenden Zertifikats umfassen.

In Schritt 204 wird ferner geprüft, ob das empfangene Zertifikat Z gültig ist und ob das Zertifikat Z zur Aktualisierung des gespeicherten Referenzwerts GK für die Gültigkeitsprüfung von Zertifikaten verwendet werden kann.

Hierzu werden in Schritt 206 der Identifikator der Ausstellgeneration GA und der Identifikator der Auslaufgeneration GE aus dem empfangenen Zertifikat Z ausgelesen. Bei den Identifikatoren handelt es sich beispielsweise jeweils um eine ganze Zahl, wobei sind eine fortgeschrittenere Generation durch einen größeren Identifikator bzw. eine größere Zahl identifiziert wird. In diesem Fall werden die Generationen nach oben gezählt. Alternativ könnten die Generationen auch heruntergezählt werden, d.h. eine fortgeschrittenere Generation wird durch einen kleineren Identifikator bzw. eine kleinere Zahl identifiziert. Für die folgenden Beispiele wird angenommen, dass fortgeschrittenere Generationen durch größere Zahlen identifiziert werden. In Schritt 208 wird geprüft, ob die Auslaufgeneration GE vor dem Referenzwert bzw. der durch den Referenzwert identifizierten Referenzgeneration GR liegt. Wenn dies der Fall ist, d.h. GE < GR gilt, ist die Gültigkeit des empfangenen Zertifikats Z abgelaufen, sodass in dem Schritt 210 ein Fehlersignal generiert wird. Ist das Gegenteil der Fall, d.h. GE ≥ GR, so wird davon ausgegangen, dass die Gültigkeit des Zertifikats Z mit hinreichender Wahrscheinlichkeit noch nicht abgelaufen ist. In Schritt 212 wird somit die Gültigkeit des empfangenen Zertifikats Z anerkannt.

Nachfolgend wird in dem Schritt 214 geprüft, ob die gespeicherte Referenzgeneration GR vor der Ausstellgeneration GA des zuvor geprüften Zertifikats Z liegt. Wenn dies nicht der Fall ist, d.h. GA ≤ GR, bleibt die gespeichert Referenzgeneration GR unverändert, sodass in Schritt 216 keine Aktualisierung des Referenzwerts erfolgt. Ist jedoch das Gegenteil der Fall, d.h. GR < GA, so wird in dem Schritt 218 die gespeicherte Referenzgeneration GR mit der neu empfangenen Ausstellgeneration GA als neuem Referenzwert GR' aktualisiert bzw. ersetzt, d.h. GR → GR' = GA.

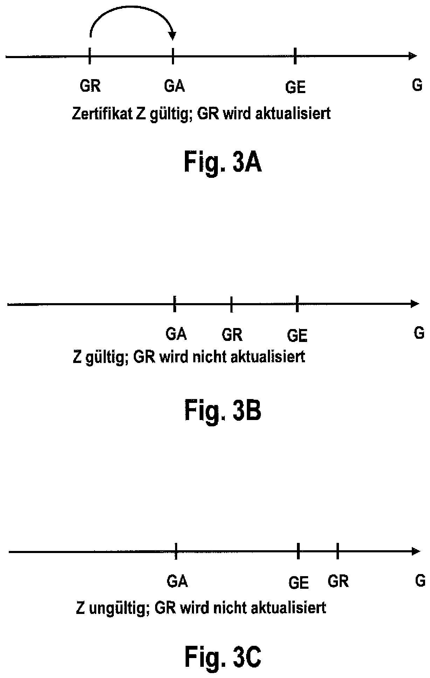

Die Figuren 3A bis 3C veranschaulichen diese Vorgehensweise gemäß den Schritten 208 bis 218 der Figur 2 näher anhand von drei verschiedenen Beispielen. Jede der Figuren 3A bis 3C zeigt hierzu einen Zahlenstrang G, welcher eine aufsteigende Generationenfolge wiedergibt.

In Figur 3A ist die Situation gezeigt, dass die Referenzgeneration GR vor der Ausstellgeneration GA und der Auslaufgeneration GE des empfangenen Zertifikats Z liegen. Wenn die Signatur des empfangenen Zertifikats Z in Ordnung ist und das Zertifikat Z die Zertifikatskettenprüfung bestanden hat, wird das Zertifikat Z als gültig anerkannt und GR wird durch GA aktualisiert (vgl. Schritt 218 der Figur 2).

Die Figur 3B zeigt ein Beispiel, wonach die gespeicherte Referenzgeneration GR zwischen GA und GE des empfangenen Zertifikats Z liegt. Auch in diesem Fall wird das Zertifikat Z als gültig anerkannt, da GR vor GE liegt. Die gespeicherte Referenzgeneration GR wird aber nicht aktualisiert, da GR hinter GA liegt und somit bereits aktueller ist (vgl. Schritt 216 der Figur 2).

Die Figur 3C zeigt ein weiteres Beispiel, wonach GR sowohl hinter GA als auch hinter GE liegt. In diesem Fall ist die Gültigkeit des Zertifikats Z mit Sicherheit abgelaufen (vgl. Schritt 210 der Figur 2). Die gespeicherte Referenzgeneration GR wird in diesem Fall ebenfalls nicht aktualisiert, da GR hinter GA liegt und somit bereits aktueller ist.

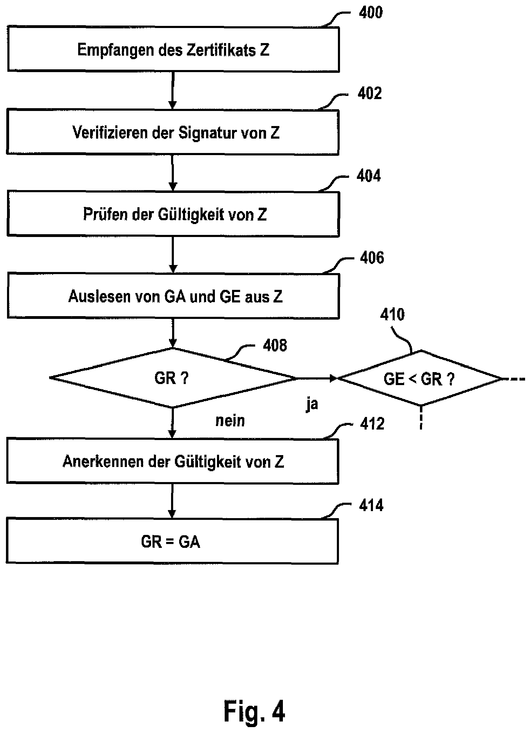

Die Figur 4 zeigt ein Flussdiagramm einer zweiten beispielhaften Ausführungsform eines erfindungsgemäßen Verfahrens. Das entsprechende Verfahren ist ein beispielhaftes Verfahren zum initialen Speichern eines initialen Referenzwerts auf dem ID-Token. Bei dem so gespeicherten Referenzwert kann es sich beispielsweise um den auf dem ID-Token zu Beginn des Verfahrens gemäß Figur 2 gespeicherten Referenzwert GR handeln. Die Schritte 400 bis 406 sind analog zu den Schritten 200 bis 206 aus Figur 2. In Schritt 408 wird geprüft, ob bereits ein Referenzwert auf dem ID-Token gespeichert ist. Ist dies der Fall, so wird das Verfahren mit Schritt 410 fortgesetzt. Schritt 410 ist analog zu Schritt 208 aus Figur 2. Durch die gestrichelten Linien wird angezeigt, dass sich an den Schritt 410 das weitere Verfahren gemäß den Schritten 210 bis 218 aus Figur 2 anschließen kann.

Ergibt die Prüfung in Schritt 408, dass kein Referenzwert auf dem ID-Token gespeichert ist, so setzt sich das Verfahren mit Schritt 412 fort. Mangels eines Referenzwerts zur Prüfung der Gültigkeit des Zertifikats Z wird dessen Gültigkeit anerkannt und in Schritt 414 die Ausstellgeneration GA des empfangenen Zertifikats Z als initialer Referenzwert GR gespeichert.

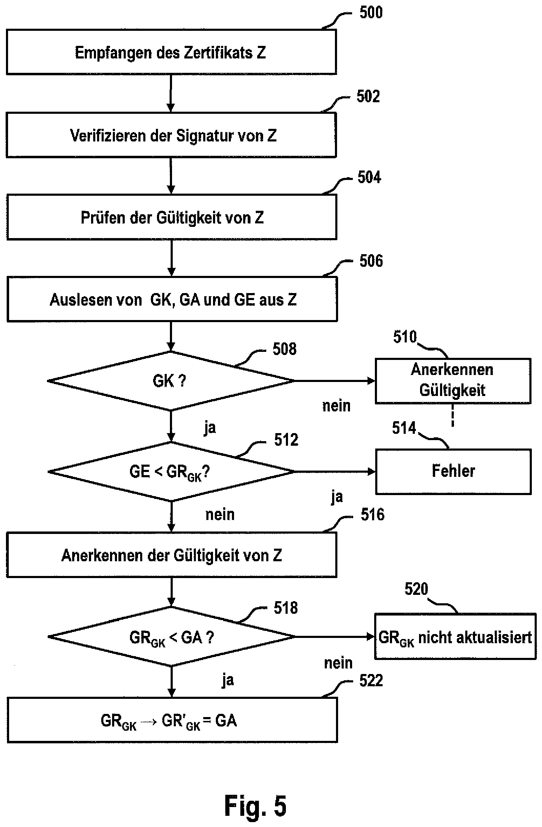

Um die Sicherheit des Verfahrens weiter zu erhöhen kann ein bestimmtes Initialisierungsterminal vorgesehen sein, mit welchem ein ID-Token zum Initialisieren eines Referenzwerts GR kommuniziert, bevor es in Umlauf gebracht wird. Alternativ kann vorgesehen sein, dass das ID-Token in Schritt 412 nur die Ausstellgeneration GA des Zertifikats Z als gültig anerkennt, nicht das Zertifikat Z selbst. Mithin wird in Schritt 414 ein initialer Referenzwert GR abgespeichert, das empfangene Zertifikat Z entfaltet darüber hinaus aber keine weitere Wirkung. Es kann vorgesehen sein, dass zunächst ein anderes Zertifikat empfangen und geprüft werden muss, bevor das zuerst empfangene und geprüfte Zertifikat Z als gültig anerkannt werden kann. Hierzu kann eine Kennung des entsprechenden initialen Zertifikats Z abgespeichert werden und solange mit der Kennung jedes weiteren empfangen und geprüften Zertifikats verglichen werden, bis die gespeicherte und die empfangene Kennung unterschiedlich sind. In diesem Fall wird in dem ID-Token beispielsweise eine entsprechende Flag gesetzt, welche anzeigt, dass außer dem initialen Zertifikat Z mindestens ein weiteres Zertifikat empfangen und geprüft wurde. Somit kann verhindert werden, dass ein gesperrtes Zertifikat (vgl. Verfahren nach Figur 5) als gültig anerkannt wird, selbst wenn es von einem neuen ID-Token als initiales Zertifikat empfangen wird.

Die Figur 5 zeigt ein Flussdiagramm einer dritten beispielhaften Ausführungsform eines erfindungsgemäßen Verfahrens. Die Schritte 500 bis 504 sind analog zu den Schritten 200 bis 204 aus Figur 2. Das empfangene Zertifikat Z umfasst neben einer Ausstellgeneration GA und einer Auslaufgeneration GE zusätzlich eine Zertifikatsfamilienkennung GK, welche die GA und GE einer bestimmten Zertifikatsfamilie zuordnet. In Schritt 506 wird neben GA und GE zusätzlich GK aus dem empfangenen Zertifikat Z ausgelesen. In Schritt 508 wird geprüft, ob eine identische Zertifikatsfamilienkennung GK auf dem ID-Token bereits gespeichert ist. Ist dies nicht der Fall, so wird das Verfahren mit Schritt 510 fortgesetzt, in dem die Gültigkeit des Zertifikats Z mangels eines gegenteiligen Vergleichswerts anerkannt wird. Der Schritt 510 ist analog zu dem Schritt 412. Durch die gestrichelte Linie wird angezeigt, dass sich an den Schritt 510 beispielsweise der Schritt 414 aus Figur 4 anschließen kann. Im Falle der Figur 5, wird dem initialen Referenzwert zusätzlich die Zertifikatsfamilienkennung GK des empfangenen Zertifikat Z zugeordnet und auf dem ID-Token abgespeichert (nicht gezeigt).

Ergibt die Prüfung in Schritt 508, dass auf dem ID-Token bereits eine zu GK identische Zertifikatsfamilienkennung gespeichert ist, so wird das Verfahren in Schritt 512 fortgesetzt. In Schritt 512 wird geprüft, ob die Auslaufgeneration GE des empfangenen Zertifikats Z vor dem Referenzwert bzw. der durch den Referenzwert identifizierten Referenzgeneration GR_{GK} liegt, welche der Zertifikatsfamilienkennung GK zugeordnet ist. Dieser Schritt ist analog zu dem Schritt 208 aus Figur 2. Die weiteren Schritte 514 bis 522 sind analog zu den Schritten 210 bis 218 aus Figur 2, wobei die Prüfungen und Ersetzungen bzw. Aktualisierungen immer gegenüber der Referenzgeneration GR_{GK} erfolgen, welche der Zertifikatsfamilienkennung GK zugeordnet ist.

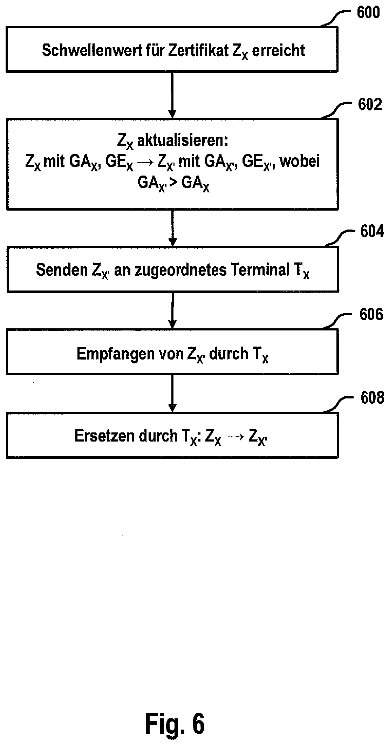

Die Figur 6 zeigt ein Flussdiagramm einer vierten beispielhaften Ausführungsform eines erfindungsgemäßen Verfahrens. Das in Figur 6 gezeigte Verfahren ist ein Verfahren zum Aktualisieren eines Zertifikats eines Terminals, wie beispielsweise eines der Zertifikate 135, 145, 155 der Terminals 130, 140, 150 aus Figur 1. Die Aktualisierung erfolgt beispielsweise durch eine Einrichtung eines Systems wie des Zertifikatsverwaltungsservers 110 des Systems 100. In Schritt 600 wird beispielweise ein Schwellenwert S_{X} für das Zertifikat Z_{X} erreicht. Dieser Schwellenwert S_{X} kann beispielsweise der Ablauf eines vordefinierten Zeitintervalls oder das Ausstellen eines Zertifikats mit einer Ausstellgeneration, die identisch mit der der Ablaufgeneration des Zertifikats Z_{X} ist. In letzterem Fall erreicht also die Generation der aktuell ausgestellten Zertifikate die Ablaufgeneration. Nach Ausführungsformen kann der Schwellenwert S_{X} auch das Erreichen einer Ausstellgeneration beim Ausstellen von Zertifikaten sein, die einen vordefinierten Abstand zu der Ablaufgeneration GE_{X} des Zertifikats Z_{X} aufweist, beispielsweise 1. Auf die Feststellung in Schritt 600 hin, dass der Schwellenwert S_{X} erreicht ist, wird das Zertifikats Z_{X} in Schritt 602 aktualisiert. Hierzu wird das bisherige Zertifikat Z_{X} mit der Ausstellgeneration GA_{X} und der Auslaufgeneration GE_{X} durch ein neues Zertifikat Z_{X'} mit einer neuen, aktuellen Ausstellgeneration GA_{X'} und einer neuen Auslaufgeneration GE_{X'} ersetzt, wobei GA_{X'} > GA_{X} gilt. Mit anderen Worten, die neue, aktuelle Ausstellgeneration GA_{X'} ist fortgeschrittener als die bisherige Ausstellgeneration GA_{X}. Dasselbe gilt analog für das Verhältnis zwischen neuer Auslaufgeneration GE_{X'} und bisheriger Auslaufgeneration GE_{X}. In Schritt 604 wird das aktualisierte Zertifikat Z_{X'} an das zugeordnete Terminal T_{X} gesendet. In Schritt 606 wird das aktualisierte Zertifikat Z_{X'} durch das Terminal T_{X} empfangen, woraufhin das Terminal T_{X} in Schritt 608 das bisherige in T_{X} gespeicherte Zertifikat Z_{X} durch das aktualisierte Zertifikat Z_{X'} ersetzt.

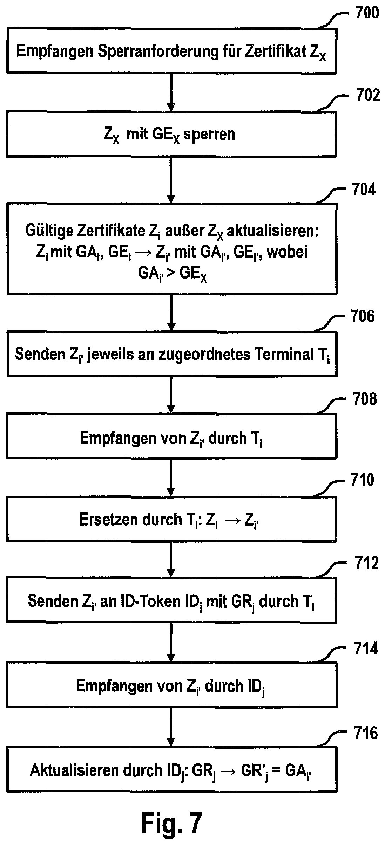

Die Figur 7 zeigt ein Flussdiagramm einer fünften beispielhaften Ausführungsform eines erfindungsgemäßen Verfahrens. Das in Figur 7 gezeigte Verfahren ist ein Verfahren zum Sperren eines Zertifikats eines Terminals, wie beispielsweise eines der Zertifikate 135, 145, 155 der Terminals 130, 140, 150 aus Figur 1. Die Sperrung erfolgt beispielsweise durch eine Einrichtung eines Systems wie den Zertifikatsverwaltungsservers 110 des Systems 100. In Schritt 700 wird eine Sperranforderung beispielsweise für das Zertifikat Z_{X} empfangen. In Schritt 702 wird das Zertifikat Z_{X}, welches eine Auslaufgeneration GE_{X} aufweist, auf die Sperranforderung hin gesperrt. Hierzu werden in Schritt 704 alle gültigen Zertifikate Zᵢ oder, im Falle verschiedener Zertifikatsfamilien, alle gültigen Zertifikate derselben Zertifikatsfamilie aktualisiert. Im Falle des Systems 100 aus Figur 1 sind dies bei einer Sperrung des Zertifikats Z_{X} 155 des Terminals X 150 beispielsweise die Zertifikate Z_{A} 135 des Terminals A 130 und Z_{B} 145 des Terminals B 140. Die entsprechenden bisherigen Zertifikat Zᵢ mit der jeweiligen Ausstellgeneration GAᵢ und der jeweiligen Auslaufgeneration GEᵢ werden jeweils durch ein neues Zertifikat Z_{i'} mit einer neuen, aktuellen Ausstellgeneration GA_{i'} und einer neuen Auslaufgeneration GE_{i'} ersetzt, wobei GA_{i'} > GAᵢ gilt. Mit anderen Worten, die jeweilige neue, aktuelle Ausstellgeneration GA_{i'} ist fortgeschrittener als die entsprechende bisherige Ausstellgeneration GAᵢ. Dasselbe gilt analog für das Verhältnis zwischen der jeweiligen neuen Auslaufgeneration GE_{i'} und der bisheriger Auslaufgeneration GEᵢ.

In Schritt 706 werden die aktualisierten Zertifikate Z_{i'} an das jeweils zugeordnete Terminal Tᵢ gesendet. In Schritt 708 empfangen die Terminals Tᵢ jeweils eines der aktualisierten Zertifikate Z_{i'}. In Schritt 710 ersetzen die Terminals Tᵢ das jeweilige bisherige Zertifikat Zᵢ durch das empfangene aktualisiert Zertifikate Z_{i'}. In Schritt 712 sendet eines der Terminals Tᵢ sein aktualisiertes Zertifikat Z_{i'} an eines der ID-Token IDⱼ. Das ID-Token IDⱼ, welches das aktualisierte Zertifikat Z_{i'} in Schritt 714 empfängt, hat einen Referenzwert GRⱼ gespeichert. Dieser Referenzwert GRⱼ entspricht beispielweise einer der Ausstellgenerationen GAᵢ eines der bisherigen Zertifikate Zᵢ, welches das ID-Token IDⱼ vor der Sperrung empfangen hat und welches nun aktualisiert wurde. In Schritt 716 wird der bisherige Referenzwert GRⱼ durch einen aktualisierten Referenzwert GR_{j'} = GA_{i'} ersetzt. Somit gilt GR_{j'} > GE_{X}, da GA_{i'} > GE_{X}. Die Schritt 714 und 716 entsprechen dabei beispielsweise einem Verfahren analog zu dem Verfahren aus Figur 2 oder Figur 5. Somit ist sichergestellt, dass das zu sperrende Zertifikat Z_{X} von dem ID-Token IDⱼ zukünftig stets als ungültig zurückgewiesen wird. Da alle gültigen Zertifikate Zᵢ der zugeordneten Terminals Tᵢ aktualisiert wurden, kann sichergestellt werden, dass alle im Umlauf befindlichen ID-Token zeitnahe ein aktualisiertes Zertifikate Z_{i'} empfangen und somit ihre jeweiligen Referenzwerte durch die aktualisierte(n) Ausstellgeneration(en) der aktualisierten Zertifikate Z_{i'} ersetzen. Im Ergebnis wird das zu sperrende Zertifikat Z_{X} von keinem der ID-Token mehr als gültig anerkannt.

Mögliche Ausführungsformen umfassen beispielsweise die folgenden Merkmalskombinationen:
1. Verfahren zum Prüfen der Gültigkeit eines ersten Zertifikats durch ein ID-Token, wobei das Verfahren umfasst:
   - Empfangen des ersten Zertifikats über eine Kommunikationsschnittstelle des ID-Tokens,
      wobei das erste Zertifikat eine Signatur einer Berechtigungs-PKI aufweist, wobei das erste Zertifikat einen Identifikator einer Ausstellgeneration und einen Identifikator einer Auslaufgeneration aufweist, die die Gültigkeit des ersten Zertifikats festgelegen, wobei die Ausstellgeneration die Zertifikatsgeneration festlegt, mit der die Gültigkeit des ersten Zertifikats beginnt, und wobei die Auslaufgeneration die Zertifikatsgeneration festlegt, mit der die Gültigkeit des ersten Zertifikats endet,
      wobei in einem Speicher des ID-Tokens ein Identifikator einer Ausstellgeneration eines zweiten Zertifikats gespeichert ist, welches das ID-Token zu einem früheren Zeitpunkt empfangen hat, wobei die gespeicherte Ausstellgeneration des zweiten Zertifikats einen Referenzwert für die Gültigkeitsprüfung festlegt,
   - Verifizieren der Signatur des ersten Zertifikats durch das ID-Token,
   - Prüfen der Gültigkeit des ersten Zertifikats durch das ID-Token, wobei geprüft wird, ob die Auslaufgeneration des ersten Zertifikats identisch zum oder fortgeschrittener als der Referenzwert für die Gültigkeitsprüfung ist,
   - im Fall, dass die Auslaufgeneration des ersten Zertifikats identisch zum oder fortgeschrittener als der Referenzwert für die Gültigkeitsprüfung ist, Anerkennen der Gültigkeit des ersten Zertifikats durch das ID-Token,
   - Prüfen, ob die Ausstellgeneration des ersten Zertifikats fortgeschrittener als der Referenzwert für die Gültigkeitsprüfung ist,
   - im Fall, dass die Ausstellgeneration des ersten Zertifikats fortgeschrittener als der Referenzwert für die Gültigkeitsprüfung ist, Ersetzen des Identifikators der Ausstellgeneration des zweiten Zertifikats im Speicher des ID-Tokens durch den Identifikator der Ausstellgeneration des ersten Zertifikats als neuem Referenzwert für Gültigkeitsprüfungen von Zertifikaten durch das ID-Token.
2. Verfahren nach Punkt 1, wobei das erste Zertifikat zusätzlich eine den Identifikatoren zugeordnete erste Zertifikatsfamilienkennung umfasst, wobei in dem Speicher des ID-Tokens eine dem Referenzwert zugordnete zweite Zertifikatsfamilienkennung des zweiten Zertifikats gespeichert ist, wobei beim Prüfen der Gültigkeit des ersten Zertifikats geprüft wird, ob die zweite Zertifikatsfamilienkennung mit der ersten Zertifikatsfamilienkennung übereinstimmt, und wobei die gespeicherte Ausstellgeneration des zweiten Zertifikats nur bei Feststellen einer Übereinstimmung als Referenzwert für die Gültigkeitsprüfung des ersten Zertifikats verwendet wird.
3. Verfahren nach einem der vorangehenden Punkte, wobei ein initiales Speichern eines initialen Referenzwerts für Gültigkeitsprüfungen von Zertifikaten durch das ID-Token umfasst:
   - Empfangen eines initialen Zertifikats über die Kommunikationsschnittstelle des ID-Tokens,
      wobei das initiale Zertifikat eine Signatur einer Berechtigungs-PKI und zumindest einen Identifikator einer Ausstellgeneration aufweist, wobei die Ausstellgeneration die Zertifikatsgeneration festlegt, mit der die Gültigkeit des initialen Zertifikats beginnt,
   - Verifizieren der Signatur des initialen Zertifikats durch das ID-Token,
   - Prüfen, ob ein Referenzwert für Gültigkeitsprüfungen von Zertifikaten in dem Speicher des ID-Tokens gespeichert ist,
   - im Fall, dass kein Referenzwert für Gültigkeitsprüfungen von Zertifikaten in dem Speicher des ID-Tokens gespeichert ist, Anerkennen der Gültigkeit des initialen Zertifikats durch das ID-Token und Speichern des Identifikators der Ausstellgeneration des initialen Zertifikats im Speicher des ID-Tokens als initialem Referenzwert für Gültigkeitsprüfungen von Zertifikaten durch das ID-Token.
4. Verfahren nach Punkt 3, wobei das initiale Zertifikat zusätzlich eine dem Identifikator der Ausstellgeneration zugeordnete Zertifikatsfamilienkennung umfasst, wobei im Fall, dass kein Referenzwert für Gültigkeitsprüfungen von Zertifikaten in dem Speicher des ID-Tokens gespeichert ist, die Zertifikatsfamilienkennung des initialen Zertifikats im Speicher des ID-Tokens gespeichert wird.
5. Verfahren nach einem der vorangehenden Punkte, wobei das Verfahren im Fall, dass der Referenzwert für die Gültigkeitsprüfung fortgeschrittener ist als die Auslaufgeneration des empfangenen ersten Zertifikats, umfasst:
   - Feststellen der Ungültigkeit des ersten Zertifikats.
6. Verfahren nach einem der vorangehenden Punkte, wobei die Identifikatoren jeweils eine ganze Zahl sind.
7. Verfahren nach Punkt 6, wobei ein Identifikator, der eine fortgeschrittenere Generation identifiziert, größer ist als ein Identifikator, der eine weniger fortgeschrittene Generation identifiziert.
8. Verfahren nach Punkt 6, wobei ein Identifikator, der eine fortgeschrittenere Generation identifiziert, kleiner ist als ein Identifikator, der eine weniger fortgeschrittene Generation identifiziert.
9. Verfahren nach einem der vorangehenden Punkte, wobei die Zertifikate Zertifikate nach dem Standard X.509 oder CV-Zertifikate nach dem Standard ISO 7816-8 sind, bei denen die Zeitangaben im Gültigkeitsfeld durch den Identifikator der Ausstellgeneration und den Identifikator der Auslaufgeneration ersetzt sind.
10. Verfahren nach einem der vorangehenden Punkte, wobei das erste Zertifikat mit einer Nachricht empfangen wird, die Daten und eine Signatur der Daten aufweist, wobei die Signatur anhand des ersten Zertifikats auf deren Gültigkeit geprüft wird, und die Daten verarbeitet werden, wenn die Signatur als gültig erkannt worden ist.
11. Verfahren nach einem der vorangehenden Punkte, wobei ein Sperren eines zu sperrenden Zertifikats umfasst:
   - Erzeugen eines dritten Zertifikats, wobei das dritte Zertifikat eine Signatur einer Berechtigungs-PKI aufweist, wobei das dritte Zertifikat einen Identifikator einer Ausstellgeneration und einen Identifikator einer Auslaufgeneration aufweist, die die Gültigkeit des dritten Zertifikats festgelegen, wobei die Ausstellgeneration die Zertifikatsgeneration festlegt, mit der die Gültigkeit des dritten Zertifikats beginnt, wobei die Auslaufgeneration die Zertifikatsgeneration festlegt, mit der die Gültigkeit des dritten Zertifikats endet, und wobei die Austellgeneration des dritten Zertifikats fortgeschrittener ist als eine Auslaufgeneration des zu sperrenden Zertifikats,
   - Senden des dritten Zertifikats an das ID-Token.
12. Verfahren nach Punkt 11, wobei das zu sperrende Zertifikat das erste Zertifikat ist und wobei das Sperren weiter umfasst,
   - Empfangen des dritten Zertifikats über die Kommunikationsschnittstelle des ID-Tokens,
   - Verifizieren der Signatur des dritten Zertifikats durch das ID-Token,
   - Prüfen der Gültigkeit des dritten Zertifikats durch das ID-Token, wobei geprüft wird, ob die Auslaufgeneration des dritten Zertifikats identisch zum oder fortgeschrittener als der Referenzwert für die Gültigkeitsprüfung ist,
   - im Fall, dass die Auslaufgeneration des dritten Zertifikats identisch zum oder fortgeschrittener als der Referenzwert für die Gültigkeitsprüfung ist, Anerkennen der Gültigkeit des dritten Zertifikats durch das ID-Token,
   - Prüfen, ob die Ausstellgeneration des dritten Zertifikats fortgeschrittener als der Referenzwert für die Gültigkeitsprüfung ist,
   - im Fall, dass die Ausstellgeneration des dritten Zertifikats fortgeschrittener als der Referenzwert für die Gültigkeitsprüfung ist, Ersetzen des Referenzwert für die Gültigkeitsprüfung im Speicher des ID-Tokens durch den Identifikator der Ausstellgeneration des dritten Zertifikats als neuem Referenzwert für Gültigkeitsprüfungen von Zertifikaten durch das ID-Token.
13. Verfahren nach Punkt 12, wobei das dritte Zertifikat durch einen Zertifikatsverwaltungsserver erzeugt und über ein Terminal an das ID-Token gesendet wird.
14. Verfahren nach einem der Punkte 12 bis 13, wobei das dritte Zertifikat dazu konfiguriert ist, das erste Zertifikat zu ersetzen.
15. Verfahren nach Punkt 14, wobei das erste Zertifikat bei Erreichen eines vordefinierten Schwellenwerts automatisch durch Erzeugung und Senden des dritten Zertifikats gesperrt wird.
16. Digitales Speichermedium mit einem darin gespeicherten Zertifikat, wobei das Zertifikat eine Signatur einer Berechtigungs-PKI aufweist, wobei das Zertifikat einen Identifikator einer Ausstellgeneration und einen Identifikator einer Auslaufgeneration aufweist, die die Gültigkeit des Zertifikats festgelegen, wobei die Ausstellgeneration die Zertifikatsgeneration festlegt, mit der die Gültigkeit des Zertifikats beginnt, und wobei die Auslaufgeneration die Zertifikatsgeneration festlegt, mit der die Gültigkeit des Zertifikats endet.
17. Digitales Speichermedium nach Punkt 16, wobei das Zertifikat eine den Identifikatoren zugeordnete Zertifikatsfamilienkennung aufweist.
18. Digitales Speichermedium nach einem der Punkte 16 oder 17, wobei die Identifikatoren jeweils eine ganze Zahl sind.
19. Digitales Speichermedium nach Punkt 18, wobei ein Identifikator, der eine fortgeschrittenere Generation identifiziert, größer ist als ein Identifikator, der eine weniger fortgeschrittene Generation identifiziert.
20. Digitales Speichermedium nach Punkt 18, wobei ein Identifikator, der eine fortgeschrittenere Generation identifiziert, kleiner ist als ein Identifikator, der eine weniger fortgeschrittene Generation identifiziert.
21. Digitales Speichermedium nach einem der Punkte 16 bis 20, wobei das Zertifikat ein Zertifikat nach dem Standard X.509 oder ein CV-Zertifikat nach dem Standard ISO 7816-8 ist, bei dem die Zeitangaben im Gültigkeitsfeld durch den Identifikator der Ausstellgeneration und den Identifikator der Auslaufgeneration ersetzt ist.
22. ID-Token mit einer Kommunikationsschnittstelle und einem Speicher, wobei das ID-Token dazu konfiguriert ist, ein Verfahren nach einem der Punkte 1 bis 15 auszuführen.
23. System, welches mindestens ein ID-Token nach Punkt 22 und mindestens ein Terminal umfasst, wobei das Terminal Kommunikationsschnittstellen und ein digitales Speichermedium mit einem Zertifikat nach einem der Punkte 16 bis 21 umfasst und das Terminal dazu konfiguriert ist, das Zertifikat an das ID-Token zu senden.
24. System nach Punkt 23, wobei das System einen Zertifikatsverwaltungsserver umfasst, welcher dazu konfiguriert ist, das Zertifikat des Terminals zu erzeugen, zu sperren und an das Terminal zu senden.
25. System nach einem der Punkte 23 oder 24, wobei das System eine Mehrzahl an Terminals jeweils mit Kommunikationsschnittstellen und einem digitalen Speichermedium mit einem dem jeweiligen Terminal zugeordneten Zertifikat nach einem der Punkte 16 bis 21 umfasst und wobei das jeweilige Terminal dazu konfiguriert ist, das entsprechende Zertifikat an das ID-Token zu senden.
26. System nach Punkt 25, wobei alle Zertifikate jeweils eine identische Familienkennung aufweisen.
27. System nach einem der Punkte 24 bis 26, wobei der Zertifikatsverwaltungsserver dazu konfiguriert ist, die den Terminals jeweils zugeordneten Zertifikate zu erzeugen, zu sperren und jeweils an das zugeordnete Terminal zu senden.
28. System nach Punkt 27, wobei der Zertifikatsverwaltungsserver dazu konfiguriert ist, zum Sperren eines Zertifikats eines der Terminals für alle verbleibenden Terminals der Mehrzahl an Terminals jeweils ein neues Zertifikat zum Ersetzen des bisherigen Zertifikats des jeweiligen Terminals zu erzeugen, wobei das jeweilige neue Zertifikat eine Signatur einer Berechtigungs-PKI, einen Identifikator einer Ausstellgeneration und einen Identifikator einer Auslaufgeneration aufweist, wobei die Identifikatoren die Gültigkeit des jeweiligen neuen Zertifikats festgelegen, wobei die Ausstellgeneration die Zertifikatsgeneration festlegt, mit der die Gültigkeit des neuen Zertifikats beginnt, wobei die Auslaufgeneration die Zertifikatsgeneration festlegt, mit der die Gültigkeit des neuen Zertifikats endet, und wobei die Austellgeneration fortgeschrittener ist als die Auslaufgeneration des zu sperrenden Zertifikats, und die neuen Zertifikate an die jeweiligen zugeordneten Terminals zu senden.
29. System nach einem der Punkte 27 oder 28, wobei der Zertifikatsverwaltungsserver dazu konfiguriert ist, für die Zertifikate der Terminals jeweils bei Erreichen eines vordefinierten Schwellenwerts automatisch ein neues Zertifikat zum Ersetzen des bisherigen Zertifikats des jeweiligen Terminals zu erzeugen, wobei das jeweilige neue Zertifikat eine Signatur einer Berechtigungs-PKI, einen Identifikator einer Ausstellgeneration und einen Identifikator einer Auslaufgeneration aufweist, wobei die Identifikatoren die Gültigkeit des jeweiligen neuen Zertifikats festgelegen, wobei die Ausstellgeneration die Zertifikatsgeneration festlegt, mit der die Gültigkeit des neuen Zertifikats beginnt, wobei die Auslaufgeneration die Zertifikatsgeneration festlegt, mit der die Gültigkeit des neuen Zertifikats endet, wobei die Austellgeneration fortgeschrittener ist als die Auslaufgeneration des bisherigen Zertifikats des jeweiligen Terminals, und die neuen Zertifikate an die jeweiligen zugeordneten Terminals zu senden.
30. System nach einem der Punkte 27 bis 29, wobei die erzeugten Zertifikate jeweils eine zu der Familienkennung der zu ersetzenden Zertifikate identische Familienkennung aufweisen.

### Bezugszeichenliste

- 100: System
- 110: ID-Token
- 111: Prozessor
- 112: Speicher
- 113: Instruktionen
- 114: Asymmetrisches Schlüsselpaar
- 115: Zertifikate
- 116: Schnittstelle
- 120: Netzwerk
- 130: Terminal
- 131: Prozessor
- 132: Speicher
- 133: Instruktionen
- 134: öffentlicher Schlüssel
- 135: Zertifikat
- 136: Schnittstelle
- 140: Terminal
- 141: Prozessor
- 142: Speicher
- 143: Instruktionen
- 145: Zertifikat
- 146: Schnittstelle
- 150: Terminal
- 151: Prozessor
- 152: Speicher
- 153: Instruktionen
- 155: Zertifikat
- 156: Schnittstelle
- 160: ID-Token
- 161: Prozessor
- 162: Speicher
- 163: Instruktionen
- 164: Referenzwert
- 165: Schnittstelle
- 170: ID-Token
- 171: Prozessor
- 172: Speicher
- 173: Instruktionen
- 174: Referenzwert
- 175: Schnittstelle
- Z: Zertifikat
- T: Terminal
- ID: ID-Token
- GA: Ausstellgeneration
- GE: Auslaufgeneration
- GR: Referenzwert
- GK: Zertifikatsfamilienkennung
- S: Schwellenwert

## Patentansprüche

1. Verfahren zum Prüfen der Gültigkeit eines ersten Zertifikats (Z, Z_{X}) durch ein ID-Token (160, 170) unter Verwendung von frei festsetzbaren Generationen zur zeitunabhängigen Steuerung der Gültigkeit des Zertifikats, wobei das Verfahren umfasst:
- Empfangen des ersten Zertifikats (Z, Z_{X}) über eine Kommunikationsschnittstelle (165, 175) des ID-Tokens (160, 170),
wobei das erste Zertifikat (Z, Z_{X}) eine Signatur einer Berechtigungs-PKI aufweist, wobei das erste Zertifikat (Z, Z_{X}) einen Identifikator einer Ausstellgeneration (GA, GA_{X}) und einen Identifikator einer Auslaufgeneration (GE, GE_{X}) aufweist, die die Gültigkeit des ersten Zertifikats (Z, Z_{X}) festgelegen, wobei die Ausstellgeneration (GA, GA_{X}) die Zertifikatsgeneration festlegt, mit der die Gültigkeit des ersten Zertifikats (Z, Z_{X}) beginnt, und wobei die Auslaufgeneration (GE, GE_{X}) die Zertifikatsgeneration festlegt, mit der die Gültigkeit des ersten Zertifikats (Z, Z_{X}) endet,
wobei in einem Speicher (162, 172) des ID-Tokens (160, 170) ein Identifikator einer Ausstellgeneration eines zweiten Zertifikats gespeichert ist, welches das ID-Token zu einem früheren Zeitpunkt empfangen hat, wobei die gespeicherte Ausstellgeneration des zweiten Zertifikats einen Referenzwert (GR, GR_{GK}) für die Gültigkeitsprüfung festlegt,
- Verifizieren der Signatur des ersten Zertifikats (Z, Z_{X}) durch das ID-Token (160, 170),
- Prüfen der Gültigkeit des ersten Zertifikats (Z, Z_{X}) durch das ID-Token (160, 170), wobei geprüft wird, ob die Auslaufgeneration (GE, GE_{X}) des ersten Zertifikats (Z, Z_{X}) identisch zum oder fortgeschrittener als der Referenzwert (GR, GR_{GK}) für die Gültigkeitsprüfung ist,
- im Fall, dass die Auslaufgeneration (GE, GE_{X}) des ersten Zertifikats (Z, Z_{X}) identisch zum oder fortgeschrittener als der Referenzwert (GR, GR_{GK}) für die Gültigkeitsprüfung ist, Anerkennen der Gültigkeit des ersten Zertifikats (Z, Z_{X}) durch das ID-Token (160, 170),
- Prüfen, ob die Ausstellgeneration (GA, GA_{X}) des ersten Zertifikats (Z, Z_{X}) fortgeschrittener als der Referenzwert (GR, GR_{GK}) für die Gültigkeitsprüfung ist,
- im Fall, dass die Ausstellgeneration (GA, GA_{X}) des ersten Zertifikats (Z, Z_{X}) fortgeschrittener als der Referenzwert (GR, GR_{GK}) für die Gültigkeitsprüfung ist, Ersetzen des Identifikators der Ausstellgeneration des zweiten Zertifikats im Speicher (162, 172) des ID-Tokens (160, 170) durch den Identifikator der Ausstellgeneration (GA, GA_{X}) des ersten Zertifikats (Z, Z_{X}) als neuem Referenzwert (GR', GR'_{GK}) für Gültigkeitsprüfungen von Zertifikaten durch das ID-Token (160, 170)
wobei das erste Zertifikat (Z, Z_{X}) zusätzlich eine den Identifikatoren zugeordnete erste Zertifikatsfamilienkennung (GK) umfasst, wobei in dem Speicher (162, 172) des ID-Tokens (160, 170) eine dem Referenzwert (GR_{GK}) zugordnete zweite Zertifikatsfamilienkennung des zweiten Zertifikats gespeichert ist, wobei beim Prüfen der Gültigkeit des ersten Zertifikats (Z, Z_{X}) geprüft wird, ob die zweite Zertifikatsfamilienkennung mit der ersten Zertifikatsfamilienkennung (GK) übereinstimmt, und wobei die gespeicherte Ausstellgeneration des zweiten Zertifikats nur bei Feststellen einer Übereinstimmung als Referenzwert (GR_{GK}) für die Gültigkeitsprüfung des ersten Zertifikats (Z, Z_{X}) verwendet wird.

2. Verfahren nach einem der vorangehenden Ansprüche, wobei ein initiales Speichern eines initialen Referenzwerts (GR, GR_{GK}) für Gültigkeitsprüfungen von Zertifikaten durch das ID-Token (160, 170) umfasst:
- Empfangen eines initialen Zertifikats (Z) über die Kommunikationsschnittstelle (165, 175) des ID-Tokens (160, 170),
wobei das initiale Zertifikat (Z) eine Signatur einer Berechtigungs-PKI und zumindest einen Identifikator einer Ausstellgeneration (GA) aufweist, wobei die Ausstellgeneration (GA) die Zertifikatsgeneration festlegt, mit der die Gültigkeit des initialen Zertifikats (Z) beginnt,
- Verifizieren der Signatur des initialen Zertifikats (Z) durch das ID-Token (160, 170),
- Prüfen, ob ein Referenzwert (GR, GR_{GK}) für Gültigkeitsprüfungen von Zertifikaten in dem Speicher (162, 172) des ID-Tokens (160, 170) gespeichert ist,
- im Fall, dass kein Referenzwert für Gültigkeitsprüfungen von Zertifikaten in dem Speicher (162, 172) des ID-Tokens (160, 170) gespeichert ist, Anerkennen der Gültigkeit des initialen Zertifikats (Z) durch das ID-Token (160, 170) und Speichern des Identifikators der Ausstellgeneration (GA) des initialen Zertifikats (Z) im Speicher (162, 172) des ID-Tokens (160, 170) als initialem Referenzwert (GR, GR_{GK}) für Gültigkeitsprüfungen von Zertifikaten durch das ID-Token (160, 170).

3. Verfahren nach Anspruch 2, wobei das initiale Zertifikat (Z) zusätzlich eine dem Identifikator der Ausstellgeneration (GA) zugeordnete Zertifikatsfamilienkennung (GK) umfasst, wobei im Fall, dass kein Referenzwert (GR_{GK}) für Gültigkeitsprüfungen von Zertifikaten in dem Speicher (162, 172) des ID-Tokens (160, 170) gespeichert ist, die Zertifikatsfamilienkennung (GK) des initialen Zertifikats (Z) im Speicher (162, 172) des ID-Tokens (160, 170) gespeichert wird.

4. Verfahren nach einem der vorangehenden Ansprüche, wobei das Verfahren im Fall, dass der Referenzwert (GR, GR_{GK}) für die Gültigkeitsprüfung fortgeschrittener ist als die Auslaufgeneration (GE, GE_{X}) des empfangenen ersten Zertifikats (Z, Z_{X}), umfasst:
- Feststellen der Ungültigkeit des ersten Zertifikats (Z, Z_{X}).

5. Verfahren nach einem der vorangehenden Ansprüche, wobei die Identifikatoren (GA, GA_{X}; GE, GE_{X}) jeweils eine ganze Zahl sind und wobei ein Identifikator (GA, GA_{X}; GE, GE_{X}), der eine fortgeschrittenere Generation identifiziert, größer ist als ein Identifikator, (GA, GA_{X}; GE, GE_{X}) der eine weniger fortgeschrittene Generation identifiziert oder wobei ein Identifikator (GA, GA_{X}; GE, GE_{X}), der eine fortgeschrittenere Generation identifiziert, kleiner ist als ein Identifikator, (GA, GA_{X}; GE, GE_{X}) der eine weniger fortgeschrittene Generation identifiziert.

6. Verfahren nach einem der vorangehenden Ansprüche, wobei das erste Zertifikat (Z, Z_{X}) mit einer Nachricht empfangen wird, die Daten und eine Signatur der Daten aufweist, wobei die Signatur anhand des ersten Zertifikats (Z, Z_{X}) auf deren Gültigkeit geprüft wird, und die Daten verarbeitet werden, wenn die Signatur als gültig erkannt worden ist.

7. Verfahren nach einem der vorangehenden Ansprüche, wobei ein Sperren eines zu sperrenden Zertifikats (Z_{X}) umfasst:
- Erzeugen eines dritten Zertifikats (Z_{i'}), wobei das dritte Zertifikat (Z_{i'}) eine Signatur einer Berechtigungs-PKI aufweist, wobei das dritte Zertifikat (Z_{i'}) einen Identifikator einer Ausstellgeneration (GA_{i'}) und einen Identifikator einer Auslaufgeneration (GE_{i'}) aufweist, die die Gültigkeit des dritten Zertifikats (Z_{i'}) festgelegen, wobei die Ausstellgeneration (GA_{i'}) die Zertifikatsgeneration festlegt, mit der die Gültigkeit des dritten Zertifikats (Z_{i'}) beginnt, wobei die Auslaufgeneration (GE_{i'}) die Zertifikatsgeneration festlegt, mit der die Gültigkeit des dritten Zertifikats (Z_{i'}) endet, und wobei die Austellgeneration (GA_{i'}) des dritten Zertifikats (Z_{i'}) fortgeschrittener ist als eine Auslaufgeneration (GE_{X}) des zu sperrenden Zertifikats (Z_{X}),
- Senden des dritten Zertifikats (Z_{i'}) an das ID-Token (160, 170).

8. Verfahren nach Anspruch 7, wobei das zu sperrende Zertifikat (Z_{X}) das erste Zertifikat (Z, Z_{X}) ist und wobei das Sperren weiter umfasst,
- Empfangen des dritten Zertifikats (Z_{i'}) über die Kommunikationsschnittstelle (165, 175) des ID-Tokens (160, 170),
- Verifizieren der Signatur des dritten Zertifikats (Z_{i'}) durch das ID-Token (160, 170),
- Prüfen der Gültigkeit des dritten Zertifikats (Z_{i'}) durch das ID-Token (160, 170), wobei geprüft wird, ob die Auslaufgeneration (GE_{i'}) des dritten Zertifikats (Z_{i'}) identisch zum oder fortgeschrittener als der Referenzwert (GR, GR_{GK}) für die Gültigkeitsprüfung ist,
- im Fall, dass die Auslaufgeneration (GE_{i'}) des dritten Zertifikats (Z_{i'}) identisch zum oder fortgeschrittener als der Referenzwert (GR, GR_{GK}) für die Gültigkeitsprüfung ist, Anerkennen der Gültigkeit des dritten Zertifikats (Z_{i'}) durch das ID-Token (160, 170),
- Prüfen, ob die Ausstellgeneration (GA_{i'}) des dritten Zertifikats (Z_{i'}) fortgeschrittener als der Referenzwert (GR, GR_{GK}) für die Gültigkeitsprüfung ist,
- im Fall, dass die Ausstellgeneration (GA_{i'}) des dritten Zertifikats (Z_{i'}) fortgeschrittener als der Referenzwert (GR, GR_{GK}) für die Gültigkeitsprüfung ist, Ersetzen des Referenzwert (GR, GR_{GK}) für die Gültigkeitsprüfung im Speicher des ID-Tokens durch den Identifikator der Ausstellgeneration (GA_{i'}) des dritten Zertifikats (Z_{i'}) als neuem Referenzwert (GR', GR'_{GK}) für Gültigkeitsprüfungen von Zertifikaten durch das ID-Token (160, 170).

9. Verfahren nach Anspruch 8, wobei das dritte Zertifikat (Z_{i'}) durch einen Zertifikatsverwaltungsserver (110) erzeugt und über ein Terminal (130, 140, 150) an das ID-Token (160, 170) gesendet wird und/oder wobei das dritte Zertifikat (Z_{i'}) dazu konfiguriert ist, das erste Zertifikat (Z_{X}) zu ersetzen.

10. Verfahren nach Anspruch 9, wobei das erste Zertifikat (Z_{X}) bei Erreichen eines vordefinierten Schwellenwerts (Sx) automatisch durch Erzeugung und Senden des dritten Zertifikats (Z_{i'}) gesperrt wird, wobei der vordefinierte Schwellenwert (S_{X}) das Erreichen einer Ausstellgeneration beim Ausstellen von Zertifikaten ist, die einen vordefinierten Abstand zu der Auslaufgeneration (GE_{X}) des ersten Zertifikats (Z_{X}) aufweist.

11. ID-Token (160, 170) mit einer Kommunikationsschnittstelle (165, 175) und einem Speicher (162, 172), wobei das ID-Token (160, 170) dazu konfiguriert ist, ein Verfahren nach einem der Ansprüche 1 bis 10 auszuführen.

12. System (100), welches mindestens ein ID-Token (160, 170) nach Anspruch 11 und mindestens ein Terminal (130, 140, 150) umfasst, wobei das Terminal (130, 140, 150) Kommunikationsschnittstellen (136, 146, 156) und ein digitales Speichermedium (132, 142, 152) mit dem ersten Zertifikat (135, 145, 155) umfasst und das Terminal (130, 140, 150) dazu konfiguriert ist, das erste Zertifikat (135, 145, 155) an das ID-Token (160, 170) zu senden.

13. System (100) nach Anspruch 12 wobei das System (100) einen Zertifikatsverwaltungsserver (110) umfasst, welcher dazu konfiguriert ist, das erste Zertifikat (135, 145, 155) des Terminals (130, 140, 150) zu erzeugen, zu sperren und an das Terminal (130, 140, 150) zu senden und/oder wobei das System (100) eine Mehrzahl an Terminals (130, 140, 150) jeweils mit Kommunikationsschnittstellen (136, 146, 156) und einem digitalen Speichermedium (132, 142, 152) mit einem dem jeweiligen Terminal (130, 140, 150) zugeordneten Zertifikat (135, 145, 155) umfasst und wobei das jeweilige Terminal (130, 140, 150) dazu konfiguriert ist, das entsprechende Zertifikat (135, 145, 155) an das ID-Token (160, 170) zu senden, wobei die den Terminals (130, 140, 150) zugeordneten Zertifikate (135, 145, 155) jeweils eine Signatur der Berechtigungs-PKI aufweisen, wobei die Zertifikate (135, 145, 155) jeweils einen Identifikator einer Ausstellgeneration (GAA, GAB, GAX) und einen Identifikator einer Auslaufgeneration (GEA, GEB, GEX) aufweisen, die die Gültigkeit des jeweiligen Zertifikats (135, 145, 155) festgelegen, wobei die Ausstellgeneration (GAA, GAB, GAX) die Zertifikatsgeneration festlegt, mit der die Gültigkeit des jeweiligen Zertifikats (135, 145, 155) beginnt, und wobei die Auslaufgeneration (GEA, GEB, GEX) die Zertifikatsgeneration festlegt, mit der die Gültigkeit des jeweiligen Zertifikats (135, 145, 155) endet, wobei es sich bei den Generationen um frei festsetzbaren Generationen zur zeitunabhängigen Steuerung der Gültigkeit des Zertifikates handelt, wobei die den Terminals (130, 140, 150) zugeordneten Zertifikate (135, 145, 155) jeweils eine den Identifikatoren zugeordnete Zertifikatsfamilienkennung (GK) aufweisen, wobei vorzugsweise alle Zertifikate (135, 145, 155) jeweils eine identische Zertifikatsfamilienkennung (GK) aufweisen.

14. System (100) nach Anspruch 13, wobei die Identifikatoren (GAA, GAB, GAX; GEA, GEB, GEX) jeweils der den Terminals (130, 140, 150) zugeordneten Zertifikate (135, 145, 155) jeweils eine ganze Zahl sind und wobei ein Identifikator (GAA, GAB, GAX; GEA, GEB, GEX), der eine fortgeschrittenere Generation identifiziert, jeweils größer ist als ein Identifikator (GAA, GAB, GAX; GEA, GEB, GEX), der eine weniger fortgeschrittene Generation identifiziert oder wobei ein Identifikator (GAA, GAB, GAX; GEA, GEB, GEX), der eine fortgeschrittenere Generation identifiziert, jeweils kleiner ist als ein Identifikator (GAA, GAB, GAX; GEA, GEB, GEX), der eine weniger fortgeschrittene Generation identifiziert.

15. System (100) nach einem der Ansprüche 13 bis 14, wobei der Zertifikatsverwaltungsserver (110) dazu konfiguriert ist, die den Terminals (130, 140, 150) jeweils zugeordneten Zertifikate (135, 145, 155) zu erzeugen, zu sperren und jeweils an das zugeordnete Terminal (130, 140, 150) zu senden.

16. System (100) nach Anspruch 15, wobei der Zertifikatsverwaltungsserver (110) dazu konfiguriert ist, zum Sperren eines Zertifikats (155, Z_{X}) eines der Terminals (130, 140, 150) für alle verbleibenden Terminals (Tᵢ) der Mehrzahl an Terminals jeweils ein neues Zertifikat (Z_{i'}) zum Ersetzen des bisherigen Zertifikats (Zᵢ) des jeweiligen Terminals (Tᵢ) zu erzeugen, wobei das jeweilige neue Zertifikat (Z_{i'}) eine Signatur einer Berechtigungs-PKI, einen Identifikator einer Ausstellgeneration (GA_{i'}) und einen Identifikator einer Auslaufgeneration (GE_{i'}) aufweist, wobei die Identifikatoren (GA_{i'}; GE_{i'}) die Gültigkeit des jeweiligen neuen Zertifikats (Z_{i'}) festgelegen, wobei die Ausstellgeneration (GA_{i'}) die Zertifikatsgeneration festlegt, mit der die Gültigkeit des neuen Zertifikats (Z_{i'}) beginnt, wobei die Auslaufgeneration (GE_{i'}) die Zertifikatsgeneration festlegt, mit der die Gültigkeit des neuen Zertifikats (Z_{i'}) endet, und wobei die Austellgeneration (GA_{i'}) fortgeschrittener ist als die Auslaufgeneration (GE_{X}) des zu sperrenden Zertifikats (155, Z_{X}), und die neuen Zertifikate (Z_{i'}) an die jeweiligen zugeordneten Terminals (Tᵢ) zu senden und/oder wobei der Zertifikatsverwaltungsserver (110) dazu konfiguriert ist, für die Zertifikate (135, 145, 155) der Terminals (130, 140, 150) jeweils bei Erreichen eines vordefinierten Schwellenwerts automatisch ein neues Zertifikat zum Ersetzen des bisherigen Zertifikats (135, 145, 155) des jeweiligen Terminals (130, 140, 150) zu erzeugen, wobei das jeweilige neue Zertifikat eine Signatur einer Berechtigungs-PKI, einen Identifikator einer Ausstellgeneration und einen Identifikator einer Auslaufgeneration aufweist, wobei die Identifikatoren die Gültigkeit des jeweiligen neuen Zertifikats festgelegen, wobei die Ausstellgeneration die Zertifikatsgeneration festlegt, mit der die Gültigkeit des neuen Zertifikats beginnt, wobei die Auslaufgeneration die Zertifikatsgeneration festlegt, mit der die Gültigkeit des neuen Zertifikats endet, wobei die Austellgeneration fortgeschrittener ist als die Auslaufgeneration (GE_{A}, GE_{B}, GE_{X}) des bisherigen Zertifikats (135, 145, 155) des jeweiligen Terminals (130, 140, 150), und die neuen Zertifikate an die jeweiligen zugeordneten Terminals (130, 140, 150) zu senden und/oder wobei die erzeugten Zertifikate jeweils eine zu der Familienkennung (GK) der zu ersetzenden Zertifikate identische Familienkennung aufweisen.

## Claims

1. A method for checking the validity of a first certificate (Z, Z_{X}) by an ID token (160, 170) with use of freely releasable generations for time-independent control of the validity of the certificate, wherein the method comprises:
- receiving the first certificate (Z, Z_{X}) via a communications interface (165, 175) of the ID token (160, 170), wherein the first certificate (Z, Z_{X}) has a signature of an authorisation PKI, wherein the first certificate (Z, Z_{X}) has an identifier of an issuing generation (GA, GA_{X}) and an identifier of a discontinuing generation (GE, GE_{X}), which determine the validity of the first certificate (Z, Z_{X}), wherein the issuing generation (GA, GA_{X}) determines the certificate generation with which the validity of the first certificate (Z, Z_{X}) starts, and wherein the discontinuing generation (GE, GE_{X}) determines the certificate generation with which the validity of the first certificate (Z, Z_{X}) ends,
wherein an identifier of an issuing generation of a second certificate received by the ID token at an earlier point in time is stored in a memory (162, 172) of the ID token (160, 170), wherein the stored issuing generation of the second certificate determines a reference value (GR, GR_{GK}) for the validity check,
- verifying, by the ID token (160, 170), the signature of the first certificate (Z, Z_{X}),
- checking, by the ID token (160, 170), the validity of the first certificate, wherein it is checked whether the discontinuing generation (GE, GE_{X}) of the first certificate is identical to or more advanced than the reference value (GR, GR_{GK}) for the validity check,
- in the event that the discontinuing generation (GE, GE_{X}) of the first certificate is identical to or more advanced than the reference value (GR, GR_{GK}) for the validity check, acknowledging the validity of the first certificate (Z, Z_{X}) by the ID token (160, 170),
- checking whether the issuing generation (GA, GA_{X}) of the first certificate (Z, Z_{X}) is more advanced than the reference value (GR, GR_{GK}) for the validity check,
- in the event that the issuing generation (GA, GA_{X}) of the first certificate (Z, Z_{X}) is more advanced than the reference value (GR, GR_{GK}) for the validity check, replacing the identifier of the issuing generation of the second certificate in the memory (162, 172) of the ID token (160, 170) by the identifier of the issuing generation (GA, GA_{X}) of the first certificate (Z, Z_{X}) as new reference value (GR', GR'_{GK}) for validity checks of certificates by the ID token (160, 170),
wherein the first certificate (Z, Z_{X}) additionally comprises a first certificate family identifier (GK) associated with the identifiers, wherein a second certificate family identifier of the second certificate associated with the reference value (GR_{GK}) is stored in the memory (162, 172) of the ID token (160, 170), wherein, when the validity of the first certificate (Z, Z_{X}) is checked, it is checked whether the second certificate family identifier matches the first certificate family identifier (GK), and wherein the stored issuing generation of the second certificate is used as reference value (GR_{GK}) for the validity check of the first certificate (Z, Z_{X}) only when a match is determined.

2. The method according to the preceding claim, wherein an initial storage of an initial reference value (GR, GR_{GK}) for validity checks of certificates by the ID token (160, 170) comprises:
- receiving an initial certificate (Z) via the communications interface (165, 175) of the ID token (160, 170), wherein the initial certificate (Z) has a signature of an authorisation PKI and at least one identifier of an issuing generation (GA), wherein the issuing generation (GA) determines the certificate generation with which the validity of the initial certificate (Z) starts,
- verifying, by the ID token (160, 170), the signature of the initial certificate (Z),
- checking whether a reference value (GR, GR_{GK}) for validity checks of certificates is stored in the memory (162, 172) of the ID token (160, 170),
- in the event that no reference value for validity checks of certificates is stored in the memory (162, 172) of the ID token (160, 170), acknowledging the validity of the initial certificate (Z) by the ID token (160, 170) and storing the identifier of the issuing generation (GA) of the initial certificate (Z) in the memory (162, 172) of the ID token (160, 170) as initial reference value (GR, GR_{GK}) for validity checks of certificates by the ID token (160, 170).

3. The method according to claim 2, wherein the initial certificate (Z) additionally comprises a certificate family identifier (GK) associated with the identifier of the issuing generation (GAA), wherein, in the event that no reference value (GR_{GK}) for validity checks of certificates is stored in the memory (162, 172) of the ID token (160, 170), the certificate family identifier (GK) of the initial certificate (Z) is stored in the memory (162, 172) of the ID token (160, 170).

4. The method according to any one of the preceding claims, wherein the method, in the event that the reference value (GR, GR_{GK}) for the validity check is more advanced than the discontinuing generation (GE, GE_{X}) of the received first certificate (Z, Z_{X}), comprises:
- determining the invalidity of the first certificate (Z, Z_{X}).

5. The method according to any one of the preceding claims, wherein the identifiers (GA, GA_{X}; GE, GE_{X}) are in each case an integer, and wherein an identifier (GA, GA_{X}; GE, GE_{X}) which identifies a more advanced generation is larger than an identifier (GA, GA_{X}; GE, GE_{X}) which identifies a less advanced generation, or wherein an identifier (GA, GA_{X}; GE, GE_{X}) which identifies a more advanced generation is smaller than an identifier (GA, GA_{X}; GE, GE_{X}) which identifies a less advanced generation.

6. The method according to any one of the preceding claims, wherein the first certificate (Z, Z_{X}) is received with a message which comprises data and a signature of the data, wherein the validity of the signature is checked on the basis of the first certificate (Z, Z_{X}) and the data are processed if the signature has been identified as valid.

7. The method according to any one of the preceding claims, wherein a blocking of a certificate (Z_{X}) that is to be blocked comprises:
- generating a third certificate (Z_{i'}), wherein the third certificate (Z_{i'}) has a signature of an authorisation PKI, wherein the third certificate (Z_{i'}) has an identifier of an issuing generation(GA_{i'}) and an identifier of a discontinuing generation(GE_{i'}), which determine the validity of the third certificate (Z_{i'}), wherein the issuing generation (GA_{i'}) determines the certificate generation with which the validity of the third certificate (Z_{i'}) starts, wherein the discontinuing generation (GE_{i'}) determines the certificate generation with which the validity of the third certificate (Z_{i'}) ends, and wherein the issuing generation (GA_{i'}) of the third certificate (Z_{i'}) is more advanced than a discontinuing generation (GE_{X}) of the certificate (Z_{X}) to be blocked,
- sending the third certificate (Z_{i'}) to the ID token (160, 170).

8. The method according to claim 7, wherein the certificate (Z_{X}) to be blocked is the first certificate (Z, Z_{X}), and wherein the blocking further comprises
- receiving the third certificate (Z_{i'}) via the communications interface (165, 175) of the ID token (160, 170),
- verifying the signature of the third certificate (Z_{i'}) by the ID token (160, 170),
- checking the validity of the third certificate (Z_{i'}) by the ID token (160, 170), wherein it is checked whether the discontinuing generation (GE_{i'}) of the third certificate (Z_{i'}) is identical to or more advanced than the reference value (GR, GR_{GK}) for the validity check,
- in the event that the discontinuing generation (GE_{i'}) of the third certificate (Z_{i'}) is identical to or more advanced than the reference value (GR, GR_{GK}) for the validity check, acknowledging the validity of the third certificate (Z_{i'}) by the ID token (160, 170),
- checking whether the issuing generation (GA_{i'}) of the third certificate (Z_{i'}) is more advanced than the reference value (GR, GR_{GK}) for the validity check,
- in the event that the issuing generation (GA_{i'}) of the third certificate (Z_{i'}) is more advanced than the reference value (GR, GR_{GK}) for the validity check, replacing the reference value (GR, GR_{GK}) for the validity check in the memory of the ID token by the identifier of the issuing generation (GA_{i'}) of the third certificate (Z_{i'}) as new reference value (GR', GR'_{GK}) for validity checks of certificates by the ID token (160, 170).

9. The method according to claim 8, wherein the third certificate (Z_{i'}) is generated by a certificate management server (110) and is sent to the ID token (160, 170) via a terminal (130, 140, 150), and/or wherein the third certificate (Z_{i'}) is configured to replace the first certificate (Z_{X}).

10. The method according to claim 9, wherein the first certificate (Z_{X}), when a predefined threshold value (S_{X}) is reached, is automatically blocked by generation and sending of the third certificate (Z_{i'}), wherein the predefined threshold value (S_{X}) is the attainment, when issuing certificates, of an issuing generation which has a predefined distance from the discontinuing generation (GE_{X}) of the first certificate (Z_{X}).

11. An ID token (160, 170) with a communications interface (165, 175) and a memory (162, 172), wherein the ID token (160, 170) is configured to carry out a method according to any one of claims 1 to 10.

12. A system (100) which comprises at least one ID token (160, 170) according to claim 11 and at least one terminal (130, 140, 150), wherein the terminal (130, 140, 150) comprises communications interfaces (136, 146, 156) and a digital storage medium (132, 142, 152) with the first certificate (135, 145, 155), and the terminal (130, 140, 150) is configured to send the first certificate (135, 145, 155) to the ID token (160, 170).

13. The system (100) according to claim 12, wherein the system (100) comprises a certificate management server (110) which is configured to generate the first certificate (135, 145, 155) of the terminal (130, 140, 150) and to block said certificate and send it to the terminal (130, 140, 150), and/or wherein the system (100) comprises a plurality of terminals (130, 140, 150), each with communications interfaces (136, 146, 156) and a digital storage medium (132, 142, 152) with a certificate (135, 145, 155) associated with the corresponding terminal (130, 140, 150), and wherein each terminal (130, 140, 150) is configured to send the corresponding certificate (135, 145, 155) to the ID token (160, 170), wherein the certificates (135, 145, 155) associated with the terminals (130, 140, 150) each have a signature of the authorisation PKI, wherein the certificates (135, 145, 155) each have an identifier of an issuing generation (GAA, GAB, GAX) and an identifier of a discontinuing generation (GEA, GEB, GEX), which determine the validity of the particular certificate (135, 145, 155), wherein the issuing generation (GAA, GAB, GAX) determines the certificate generation with which the validity of the particular certificate (135, 145, 155) starts, and wherein the discontinuing generation (GEA, GEB, GEX) determines the certificate generation with which the validity of the particular certificate (135, 145, 155) ends, wherein the generations are freely releasable generations for time-independent control of the validity of the certificate, wherein the certificates (135, 145, 155) associated with the terminals (130, 140, 150) each have a certificate family identifier (GK) associated with the identifiers, wherein preferably all certificates (135, 145, 155) each have an identical certificate family identifier (GK).

14. The system (100) according to claim 13, wherein the identifiers (GAA, GAB, GAX; GEA, GEB, GEX) of the certificates (135, 145, 155) associated with the terminals (130, 140, 150) are in each case an integer, and wherein an identifier (GAA, GAB, GAX; GEA, GEB, GEX) which identifies a more advanced generation is in each case greater than an identifier (GAA, GAB, GAX; GEA, GEB, GEX) which identifies a less advanced generation, or wherein an identifier (GAA, GAB, GAX; GEA, GEB, GEX) which identifies a more advanced generation is in each case smaller than an identifier (GAA, GAB, GAX; GEA, GEB, GEX) which identifies a less advanced generation.

15. The system (100) according to any one of claims 13 to 14, wherein the certificate management server (110) is configured to generate the certificates (135, 145, 155) associated with the terminals (130, 140, 150) and to block said certificates and send them in each case to the corresponding terminal (130, 140, 150).

16. The system (100) according to claim 15, wherein the certificate management server (110), in order to block a certificate (155, Z_{X}) of one of the terminals (130, 140, 150), is configured to generate a new certificate (Z_{i'}) for all remaining terminals (Tᵢ) of the plurality of terminals for replacement of the previous certificate (Zᵢ) of the particular terminal (Tᵢ), wherein the new certificate (Z_{i'}) has a signature of an authorisation PKI, an identifier of an issuing generation (GA_{i'}) and an identifier of a discontinuing generation (GE_{i'}), wherein the identifiers (GA_{i'}; GE_{i'}) determine the validity of the new certificate (Z_{i'}), wherein the issuing generation (GA_{i'}) determines the certificate generation with which the validity of the new certificate (Z_{i'}) starts, wherein the discontinuing generation (GE_{i'}) determines the certificate generation with which the validity of the new certificate (Z_{i'}) ends, and wherein the issuing generation (GA_{i'}) is more advanced than the discontinuing generation (GE_{X}) of the certificate (155, Z_{X}) to be blocked, and to send the new certificates (Z_{i'}) to the corresponding associated terminals (Tᵢ), and/or wherein the certificate management server (110) is configured, for the certificates (135, 145, 155) of the terminals (130, 140, 150) when a predefined threshold value is reached, to automatically generate a new certificate for replacement of the previous certificate (135, 145, 155) of the particular terminal (130, 140, 150), wherein the new certificate has a signature of an authorisation PKI, an identifier of an issuing generation, and an identifier of a discontinuing generation, wherein the identifiers determine the validity of the new certificate, wherein the issuing generation determines the certificate generation with which the validity of the new certificate starts, wherein the discontinuing generation determines the certificate generation with which the validity of the new certificate ends, wherein the issuing generation is more advanced than the discontinuing generation (GE_{A}, GE_{B}, GE_{X}) of the previous certificate (135, 145, 155) of the particular terminal (130, 140, 150), and to send the new certificates to the corresponding associated terminals (130, 140, 150), and/or wherein the generated certificates each have a family identifier identical to the family identifier (GK) of the certificates to be replaced.

## Revendications

1. Procédé de vérification de la validité d'un premier certificat (Z, Z_{X}) par un jeton d'ID (160, 170) moyennant l'emploi de générations pouvant être fixées librement pour la commande indépendante du temps de la validité du certificat, où le procédé comprend :
- la réception du premier certificat (Z, Z_{X}) par le biais d'une interface de communication (165, 175) du jeton d'ID (160, 170),
où le premier certificat (Z, Z_{X}) présente une signature d'une infrastructure à clés publiques ICP d'autorisation, où le premier certificat (Z, Z_{X}) présente un identificateur d'une génération d'émission (GA, GA_{X}) et un identificateur d'une génération d'expiration (GE, GE_{X}) qui fixent la validité du premier certificat (Z, Z_{X}), où la génération d'émission (GA, GA_{X}) fixe la génération de certificat avec laquelle la validité du premier certificat (Z, Z_{X}) commence, et où la génération d'expiration (GE, GE_{X}) fixe la génération de certificat avec laquelle la validité du premier certificat (Z, Z_{X}) se termine,
où un identificateur d'une génération d'émission d'un deuxième certificat est stocké dans une mémoire (162, 172) du jeton d'ID (160, 170), lequel a reçu le jeton d'ID à un instant précédent, où la génération d'émission stockée du deuxième certificat fixe une valeur de référence (GR, GR_{GK}) pour la vérification de la validité,
- la vérification de la signature du premier certificat (Z, Z_{X}) par le jeton d'ID (160, 170),
- la vérification de la validité du premier certificat (Z, Z_{X}) par le jeton d'ID (160, 170), où on vérifie si la génération d'expiration (GE, GE_{X}) du premier certificat (Z, Z_{X}) est identique ou plus avancée que la valeur de référence (GR, GR_{GK}) pour la vérification de la validité,
- dans le cas où la génération d'expiration (GE, GE_{X}) du premier certificat (Z, Z_{X}) est identique ou plus avancée que la valeur de référence (GR, GR_{GK}) pour la vérification de la validité, la reconnaissance de la validité du premier certificat (Z, Z_{X}) par le jeton d'ID (160, 170),
- la vérification si la génération d'émission (GA, GA_{X}) du premier certificat (Z, Z_{X}) est plus avancée que la valeur de référence (GR, GR_{GK}) pour la vérification de la validité,
- dans le cas où la génération d'émission (GA, GA_{X}) du premier certificat (Z, Z_{X}) est plus avancée que la valeur de référence (GR, GR_{GK}) pour la vérification de la validité, le remplacement de l'identificateur de la génération d'émission du deuxième certificat dans la mémoire (162, 172) du jeton d'ID (160, 170) par l'identificateur de la génération d'émission (GA, GA_{X}) du premier certificat (Z, Z_{X}) en tant que nouvelle valeur de référence (GR', GR'_{GK}) pour des vérifications de validité de certificats par le jeton d'ID (160, 170,
où le premier certificat (Z, Z_{X}) comprend en outre une première identification de famille de certificats (GK) associée aux identificateurs, où une deuxième identification de famille de certificats du deuxième certificat associée à la valeur de référence (GR_{GK}) est stockée dans la mémoire (162, 172) du jeton d'ID (160, 170), où, lors de la vérification de la validité du premier certificat (Z, Z_{X}), on vérifie si la deuxième identification de famille de certificats correspond avec la première identification de famille de certificats (GK), et où la génération d'émission du deuxième certificat stockée est employée en tant que valeur de référence (GR_{GK}) pour la vérification de la validité du premier certificat (Z, Z_{X}) uniquement lors de la constatation d'une correspondance.

2. Procédé selon l'une des revendications précédentes, dans lequel un stockage initial d'une valeur de référence (GR, GR_{GK}) initiale pour des vérifications de validité de certificats par le jeton d'ID (160, 170) comprend :
- la réception d'un certificat initial (Z) par le biais de l'interface de communication (165, 175) du jeton d'ID (160, 170),
où le certificat initial (Z) présente une signature d'une ICP d'autorisation et au moins un identificateur d'une génération d'émission (GA), où la génération d'émission (GA) fixe la génération de certificat avec laquelle la validité du certificat initial (Z) commence,
- la vérification de la signature du certificat initial (Z) par le jeton d'ID (160, 170),
- la vérification si une valeur de référence (GR, GR_{GK}) pour des vérifications de validité de certificats est stockée dans la mémoire (162, 172) du jeton d'ID (160, 170),
- dans le cas où aucune valeur de référence pour des vérifications de validité de certificats n'est stockée dans la mémoire (162, 172) du jeton d'ID (160, 170), la reconnaissance de la validité du certificat initial (Z) par le jeton d'ID (160, 170) et le stockage de l'identificateur de la génération d'émission (GA) du certificat initial (Z) dans la mémoire (162, 172) du jeton d'ID (160, 170) en tant que valeur de référence (GR, GR_{GK}) initiale pour des vérifications de validité de certificats par le jeton d'ID (160, 170).

3. Procédé selon la revendication 2, dans lequel le certificat initial (Z) comprend en outre une identification de famille de certificats (GK) associée à l'identificateur de la génération d'émission (GA), où, dans le cas où aucune valeur de référence (GR_{GK}) pour des vérifications de validité de certificats n'est stockée dans la mémoire (162, 172) du jeton d'ID (160, 170), l'identification de famille de certificats (GK) du certificat initial (Z) est stockée dans la mémoire (162, 172) du jeton d'ID (160, 170).

4. Procédé selon l'une des revendications précédentes, où le procédé comprend, dans le cas où la valeur de référence (GR, GR_{GK}) pour la vérification de la validité est plus avancée que la génération d'expiration (GE, GE_{X}) du premier certificat (Z, Z_{X}) reçu :
- la constatation de l'invalidité du premier certificat (Z, Z_{X}).

5. Procédé selon l'une des revendications précédentes, dans lequel les identifieurs (GA, GA_{X} ; GE, GE_{X}) sont respectivement un nombre entier et dans lequel un identificateur (GA, GA_{X} ; GE, GE_{X}) qui identifie une génération plus avancée, est plus grand qu'un identificateur (GA, GA_{X} ; GE, GE_{X}) qui identifie une génération moins avancée, et dans lequel un identificateur (GA, GA_{X} ; GE, GE_{X}) qui identifie une génération plus avancée est plus petit qu'un identificateur (GA, GA_{X} ; GE, GE_{X}) qui identifie une génération moins avancée.

6. Procédé selon l'une des revendications précédentes, dans lequel le premier certificat (Z, Z_{X}) est reçu avec un message qui présente des données et une signature des donnes, où la signature est vérifiée en ce qui concerne sa validité à l'aide du premier certificat (Z, Z_{X}) et les données sont traitées lorsque la signature a été reconnue comme valide.

7. Procédé selon l'une des revendications précédentes, dans lequel le blocage d'un certificat (Z_{X}) à bloquer comprend :
- la création d'un troisième certificat (Z_{i'}), où le troisième certificat (Z_{i'}) présente une signature d'une ICP d'autorisation, où le troisième certificat (Z_{i'}) présente un identificateur d'une génération d'émission (GA_{i'}) et un identificateur d'une génération d'expiration (GE_{i'}), qui fixent la validité du troisième certificat (Z_{i'}), où la génération d'émission (GA_{i'}) fixe la génération de certificat avec laquelle la validité du troisième certificat (Z_{i'}) commence, où la génération d'expiration (GE_{i'}) fixe la génération de certificat avec laquelle la validité du troisième certificat (Z_{i'}) se termine, et où la génération d'émission (GA_{i'}) du troisième certificat (Z_{i'}) est plus avancée qu'une génération d'expiration (GE_{X}) du certificat (Z_{X}) à bloquer,
- l'envoi du troisième certificat (Z_{i'}) au jeton d'ID (160, 170).

8. Procédé selon la revendication 7, dans lequel le certificat (Z_{X}) à bloquer est le premier certificat (Z, Z_{X}) et dans lequel le blocage comprend en outre,
- la réception du troisième certificat (Z_{i'}) par le biais de l'interface de communication (165, 175) du jeton d'ID (160, 170),
- la vérification de la signature du troisième certificat (Z_{i'}) par le jeton d'ID (160, 170),
- la vérification de la validité du troisième certificat (Z_{i'}) par le jeton d'ID (160, 170), où on vérifie si la génération d'expiration (GE_{i'}) du troisième certificat (Z_{i'}) est identique ou plus avancée que la valeur de référence (GR, GR_{GK}) pour la vérification de la validité,
- dans le cas où la génération d'expiration (GE_{i'}) du troisième certificat (Z_{i'}) est identique ou plus avancée que la valeur de référence (GR, GR_{GK}) pour la vérification de la validité, la reconnaissance de la validité du troisième certificat (Z_{i'}) par le jeton d'ID (160, 170),
- la vérification si la génération d'émission (GA_{i'}) du troisième certificat (Z_{i'}) est plus avancée que la valeur de référence (GR, GR_{GK}) pour la vérification de la validité,
- dans le cas où la génération d'émission (GA_{i'}) du troisième certificat (Z_{i'}) est plus avancée que la valeur de référence (GR, GR_{GK}) pour la vérification de la validité, le remplacement de la valeur de référence (GR, GR_{GK}) pour la validité dans la mémoire du jeton d'ID par l'identificateur de la génération d'émission (GA_{i'}) du troisième certificat (Z_{i'}) en tant que nouvelle valeur de référence (GR', GR'_{GK}) pour des vérifications de validité de certificats par le jeton d'ID (160, 170).

9. Procédé selon la revendication 8, dans lequel le troisième certificat (Z_{i'}) est généré par un serveur de gestion de certificats (110) et est transmis au jeton d'ID (160, 170) par le biais d'un terminal (130, 140, 150), et/ou dans lequel le troisième certificat (Z_{i'}) est configuré pour remplacer le premier certificat (Z_{X}).

10. Procédé selon la revendication 9, dans lequel le premier certificat (Z_{X}) est bloqué automatiquement par la génération et l'envoi du troisième certificat (Z_{i'}) lorsqu'il atteint une valeur de seuil (S_{X}) prédéfinie, où la valeur de seuil (S_{X}) prédéfinie est l'atteinte d'une génération d'émission lors de l'émission de certificats qui présente un écart prédéfini par rapport à la génération d'expiration (GE_{X}) du premier certificat (Z_{X}).

11. Jeton d'ID (160, 170) doté d'une interface de communication (165, 175) et d'une mémoire (162, 172), où le jeton d'ID (160, 170) est configuré pour exécuter un procédé selon l'une des revendications 1 à 10.

12. Système (100), lequel comprend au moins un jeton d'ID (160, 170) selon la revendication 11 et au moins un terminal (130, 140, 150), où le terminal (130, 140, 150) comprend des interfaces de communication (136, 146, 156) et un support de stockage numérique (132, 142, 152) avec le premier certificat (135, 145, 155) et le terminal (130, 140, 150) est configuré pour envoyer le premier certificat (135, 145, 155) au jeton d'ID (160, 170).

13. Système (100) selon la revendication 12, où le système (100) comprend un serveur de gestion de certificats (110), lequel est configuré pour créer, pour bloquer et pour envoyer au terminal (130, 140, 150) le premier certificat (135, 145, 155) du terminal (130, 140, 150), et/ou où le système (100) comprend une multiplicité de terminaux (130, 140, 150) respectivement avec des interfaces de communication (136, 146, 156) et un support de stockage numérique (132, 142, 152) avec un certificat (135, 145, 155) associé au terminal (130, 140, 150) respectif, et où le terminal (130, 140, 150) respectif est configuré pour envoyer le certificat (135, 145, 155) correspondant au jeton d'ID (160, 170), où les certificats (135, 145, 155) associés aux terminaux (130, 140, 150) présentent respectivement une signature de l'ICP d'autorisation, où les certificats (135, 145, 155) présentent respectivement un identificateur d'une génération d'émission (GAA, GAB, GAX) et un identificateur d'une génération d'expiration (GEA, GEB, GEX) qui fixent la validité du certificat (135, 145, 155) respectif, où la génération d'émission (GAA, GAB, GAX) fixe la génération de certificat avec laquelle la validité du certificat (135, 145, 155) respectif commence, et où la génération d'expiration (GEA, GEB, GEX) fixe la génération de certificat avec laquelle la validité du certificat (135, 145, 155) respectif s'arrête, où, dans le cas des générations, il s'agit de générations pouvant être librement fixées pour une commande indépendante du temps de la validité du certificat, où les certificats (135, 145, 155) associés aux terminaux (130, 140, 150) présentent respectivement une identification de famille de certificats (GK) associée aux identificateurs, où de préférence, tous les certificats (135, 145, 155) présentent respectivement une identification de famille de certificats (GK).

14. Système (100) selon la revendication 13, dans lequel les identificateurs (GAA, GAB, GAX ; GEA, GEB, GEX) respectivement des certificats (135, 145, 155) associés aux terminaux (130, 140, 150) sont respectivement des nombres entiers et dans lequel un identificateur (GAA, GAB, GAX ; GEA, GEB, GEX) qui identifie une génération avancée, est respectivement plus grand qu'un identificateur (GAA, GAB, BGAX ; GEA, GEB, GEX) qui identifie une génération moins avancée, ou où un identificateur (GAA, GAB, GAX ; GEA, GEB, GEX) qui identifie une génération avancée est respectivement plus petit qu'un identificateur (GAA, GAB,GAX ; GEA, GEB, GEX) qui identifie une génération moins avancée.

15. Système (100) selon l'une des revendications 13 à 14, dans lequel le serveur de gestion de certificats (110) est configuré pour générer, pour bloquer et envoyer respectivement au terminal (130, 140, 150) associé, des certificats (135, 145, 155) associés respectivement aux terminaux (130, 140, 150.

16. Système (100) selon la revendication 15, dans lequel le serveur de gestion de certificats (110) est configuré pour, afin de bloquer un certificat (155, Z_{X}) de l'un des terminaux (130, 140, 150), générer, pour tous les terminaux (Tᵢ) résultants de la multiplicité des terminaux, respectivement un nouveau certificat (Z_{i'}) pour le remplacement du certificat (Zᵢ) en cours jusqu'à présent pour le terminal (Tᵢ) respectif, où le nouveau certificat (Z_{i'}) respectif présente une signature d'une ICP d'autorisation,, un identificateur d'émission (GA_{i'}) et un identificateur d'une génération d'expiration (GE_{i'}), où les identificateurs (GA_{i'}; GE_{i'}) fixent la validité du nouveau certificat (Z_{i'}) respectif, où la génération d'émission (GA_{i'}) fixe la génération de certificat avec laquelle la validité du nouveau certificat (Z_{i'}) commence, où la génération d'expiration (GE_{i'}) fixe la génération de certificat avec laquelle la validité du nouveau certificat (Z_{i'}) se termine, et où la génération d'émission (GA_{i'}) est plus avancée que la génération d'expiration (GE_{X}) du certificat (155, Z_{X}) à bloquer et pour envoyer les nouveaux certificats (Z_{i'}) aux terminaux (T_{i'}) associés respectifs, et/ou où le serveur de gestion de certificats (110) est configuré pour générer automatiquement un nouveau certificat pour le remplacement du certificat (135, 145, 155) en cours jusqu'à présent du terminal (130, 140, 150) respectif, pour les certificats (135, 145, 155) du terminal (130, 140, 150) respectivement lors de l'atteinte d'une valeur de seuil prédéfinie, où le nouveau certificat respectif présente une signature d'une ICP d'autorisation, un identificateur d'une génération d'émission et un identificateur d'une génération d'expiration, où les identificateurs fixent la validité du nouveau certificat respectif, où la génération d'émission fixe la génération de certificat avec laquelle la validité du nouveau certificat commence, où la génération d'expiration fixe la génération de certificat avec laquelle la validité du nouveau certificat se termine, où la génération d'émission est plus avancée que la génération d'expiration, (GE_{A}, GE_{B}, GE_{X}) du certificat (135, 145, 155) en cours jusqu'à présent du terminal (130, 140, 150) respectif et pour envoyer les nouveaux certificats aux terminaux (130, 140, 150) associés respectifs, et/ou où les certificats créés présentent respectivement une identification de famille identique par rapport à l'identification de famille (GK) des certificats à remplacer.
